(19) Europäisches Patentamt
European Patent Office
Office européen des brevets

(11) **EP 3 725 856 B1**

(12) **EUROPEAN PATENT SPECIFICATION**

(45) Date of publication and mention
of the grant of the patent:
**06.10.2021 Bulletin 2021/40**

(51) Int Cl.:
***C09D 183/04*** *(2006.01)* ***D06N 3/12*** *(2006.01)*

(21) Application number: **19169362.1**

(22) Date of filing: **15.04.2019**

(54) **SILICONE PREPARATION SUITABLE FOR THE PREPARATION OF MULTILAYER COMPOSITE**

ZUR HERSTELLUNG VON MEHRSCHICHTIGEM VERBUNDSTOFF GEEIGNETE
SILIKONZUBEREITUNG

PRÉPARATION DE SILICONE APPROPRIÉE POUR LA PRÉPARATION DE COMPOSITE
MULTICOUCHES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.10.2020 Bulletin 2020/43**

(73) Proprietor: **CHT Germany GmbH
72072 Tübingen (DE)**

(72) Inventors:
• **ZAPF, Ralf
72144 Dusslingen (DE)**

• **SEITZER, Dennis
72800 Eningen unter Achalm (DE)**

(74) Representative: **Vos, Derk
Maiwald Patentanwalts- und
Rechtsanwaltsgesellschaft mbH
Elisenhof
Elisenstraße 3
80335 München (DE)**

(56) References cited:
**EP-A1- 3 231 606    WO-A1-2010/078235
WO-A1-2013/096554    WO-A1-2015/100571**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to silicone preparations that are suitable for the manufacture of a cured material, in particular in the form of a layer of a multilayer composite, and kits comprising two compositions suitable for producing said silicone preparations.

### Background of the Invention

Leather is a tough, wear-resistant and hence durable material that can be used in many applications. It is relatively impermeable to water in liquid state, but at the same sufficiently permeable to gases such as air and water vapour, i.e. it is breathable, and it is soft, supple and pleasant to the touch. Therefore, it has been a very popular and desired material in the manufacture of various goods such as functional and decorative footwear and clothing as well as furniture, in particular upholstry and automobile seats. However, the manufacture of leather is elaborate and costly and, as any natural material, its quality may vary depending on the quality of the material (animal rawhide) from which it is manufactured.

Therefore, leather substitutes have been developed which mimic the advantageous properties of leather. These substitutes are commonly referred to as artificial leather and usually involve a coating of polyurethane (PU) or polyvinylchloride (PVC) applied to a textile backing, wherein additional layers of polymers may be present on the textile backing. Artificial leather can combine the advantageous properties of natural leather, in particular wear-resistance and the soft and pleasant touch (also referred to as "hand"), with additional advantages such as its reduced requirement for maintenance. Furthermore, it is possible to adjust the properties of artificial leather by suitably adjusting the polymers used. It is thus possible to prepare an artificial leather having properties such as hydrophobicity and hence the wettability that can scarcely be imparted to natural leather. The term "artificial leather" hence relates to a multilayer composite that can have a vast array of different properties which do not necessarily resemble the properties of natural leather. In this regard, it would be more appropriate to refer to such materials as multilayer composites.

A major drawback of the use of PU or PVC coatings in the manufacture of artificial leather is that organic solvents such as dimethylformamide, methyl ethyl ketone, toluene, alcohols or mixtures of these are used. These solvents can be harmful to human health and, therefore, measures have to be taken in order to avoid release to the working environment during manufacture and in order to remove any solvent from the artificial leather product such that solvent release from the final product can be prevented. These measures are complex and costly.

Furthermore, PU is generally prone to hydrolysis. Thus, when an artificial leather manufacture from PU is exposed to moisture over a prolonged period of time, the PU may undergo hydrolysis which results in a deterioration of the material. PU also has poor stain resistance, i.e. it is easily soiled and frequent washing is required.

In addition, PU and PVC generally have the drawback that recycling and processing of waste of these materials generates decomposition products such as hydrogen chloride, dioxins, hydrogen cyanide and the like which are hazardous to flora and fauna including human beings.

Multilayer composite manufactured from silicone polymers has been developed in order to overcome the shortcomings related to PU and PVC artificial leather and such a multilayer composite is also referred to as silicone leather. Silicone leather usually comprises an uppermost layer of a silicone composition on a substrate. The substrate usually is a flat textile material that can optionally have one or more coating layers on one or both of its surfaces. The layer of a silicone composition can be formed by curing a curable silicone preparation. A multilayer composite comprising a layer of said silicone composition can essentially be prepared according to two methods, namely (i) a direct coating method and (ii) a transfer coating method.

The direct coating method is characterized in that the sequence of layers of the multilayer composite is formed on a substrate layer by layer, i.e. forming a first layer by applying a first curable silicone preparation on a surface of the substrate in the form of a layer, curing the first curable silicone preparation, then, optionally, forming an intermediate layer by applying a further curable silicone preparation in the form of a layer on the surface of the first layer and curing it, wherein this step can be repeated if it is intended to form two or more intermediate layers, and forming a topcoat layer by applying a curable topcoat silicone preparation in the form of a layer on the surface of the intermediate layer if an intermediate layer is present or on the surface of the first layer and curing the curable topcoat silicone preparation.

The transfer coating method is characterized in that the sequence of layers of the multilayer composite is formed on a transfer sheet layer by layer in reversed order, i.e. the topcoat layer is formed on the surface of the transfer sheet, optionally one or more intermediate layers are formed on the surface of the topcoat layer, then the substrate is applied by placing the substrate on the curable silicone preparation from which the preceding layer (i.e. intermediate layer or topcoat layer, as the case may be) is formed and the curable silicone preparation from which the preceding layer is formed is cured. As the last step, the transfer sheet can be removed from the topcoat layer of the multilayer composite thus formed.

In order to be suitable for time-efficient manufacturing processes, it is desirable that the silicone preparation cures quickly after it has been applied irrespective of whether a direct coating method or a transfer coating method is used. The reason is that the layer of the curable silicone preparation formed on a surface has to become dimensionally stable and must no longer be tacky before it comes into contact with the next processing device (such as a roller) or is wound to a roll. The faster the layer of the curable silicone preparation becomes dimensionally stable and no longer tacky, the faster can the processing step of coating and any previous and subsequent processing step be carried out, i.e. the higher the throughput of the entire process. The properties of a multilayer composite are influenced by essentially all layers of the multilayer composite. While surface properties such as haptic properties ("hand") are governed by the uppermost layer, which forms the surface of the material, overall mechanical properties such as bending resistance result from all layers of a multilayer composite in combination.

US 2015/0165745 A1 (Daewoo International Corporation) relates to to a method for manufacturing synthetic leather using liquid silicone rubber coating solutions. The liquid silicone rubber comprises a linear siloxane having terminal vinyl groups and linear siloxane having Si-H groups. The liquid silicone rubber is cured by a hydrosilylation reaction, i.e. by an addition reaction in the presence of a platinum catalyst. The liquid silicone rubber can also contain alumina hydrate, titanium dioxide, or silica in order to improve heat resistance and flame retardancy. The silica particles can be surface-modified by bonding trimethylsily groups and/or dimethyl vinylsilyl groups to the surface.

EP 3 231 606 A1 (Shin-Etsu Chemical Co., Ltd.) a method for producing a fabric substrate molded product coated with silicone rubber, wherein the silicone rubber comprises (i) an organopolysiloxane containing at least two silicon-bonded alkenyl groups per molecule, (ii) an organohydrogenpolysiloxane containing at least two silicon-bonded hydrogen atoms per molecule, (iii) a silicone resin having $R_3SiO_{1/2}$ units and $SiO_{4/2}$ units and, optionally, $R_2SiO_{2/2}$ units and $RSiO_{3/2}$ units, wherein each R can inter alia represent a hydrocarbon groups having 1 to 8 carbon atoms such as a phenyl group, an alkyl group, a halogen-substituted alkyl group, an alkenyl group, and (iv) an addition reaction catalyst such as platinum black, platinic chloride, reaction products of chloroplatinic acid with monohydric alcohols, complexes of chloroplatinic acid and olefins, and platinum bisacetoacetate, palladium catalysts, and rhodium catalysts.

US 2018/0202100 A1 (Salirone Inc.) discloses a multicolored silicone synthetic leather prepared by coating a suspension of colored silica in a liquid silicone rubber on a textile substrate, wherein the liquid silicone rubber is prepared by mixing a vinyl silicone oil, a silicone oil containing hydrogen and a platinum catalyst.

However, despite earlier research efforts, the desire persists to have available a silicone preparation that is suitable for being applied onto a material and being quickly cured in order to obtain a multilayer composite by means of an efficient process which multilayer composite furthermore has properties such as mechanical stability (such as abrasion resistance and bending resistance), light resistance, aging resistance and pleasant hand.

The present invention has been accomplished in order to meet this desire.

## Brief Description of the Invention

In a first aspect, the present invention relates to a first kit comprising two compositions which compositions are suitable for preparing a cured material by mixing the compositions with each other and allowing the mixture to react. The kit hence comprises composition (a) and (b), wherein composition (a) and composition (b) are spatially separated from each other and composition (a) and composition (b) comprise components as defined in claim 1.

In a second aspect, the present invention relates to a first silicone preparation obtainable by mixing composition (a) and composition (b) of the first kit according to the first aspect of the present invention.

In a third aspect, the present invention relates to a method of curing the first silicone preparation, wherein curing is effected by heating the first silicone preparation to a temperature in the range of 100-200 °C.

In a fourth aspect, the present invention relates to a first cured material obtainable by curing the first silicone preparation according to the third aspect of the present invention.

In a fifth aspect, the present invention relates to a second kit comprising two compositions which compositions are suitable for preparing a cured material by mixing the compositions with each other and allowing the mixture to react. The kit hence comprises composition (c) and (d), wherein composition (c) and composition (d) are spatially separated from each other and composition (c) and composition (d) comprise components as defined in claim 5.

In a sixth aspect, the present invention relates to a second silicone preparation obtainable by mixing composition (c) and composition (d) of the second kit according to the fifth aspect of the present invention.

In a seventh aspect, the present invention relates to a method of curing the second silicone preparation, wherein curing is effected by heating the second silicone preparation to a temperature in the range of 100-200 °C.

In an eighth aspect, the present invention relates to a second cured material obtainable by curing the second silicone preparation according to the sixth aspect of the present invention.

In a ninth aspect, the present invention relates to a multilayer composite comprising a backing material, the first cured material of the fourth aspect of the invention and the second cured material according to the eighth aspect of the invention.

In a tenth aspect, the present invention relates to a method of preparing the multilayer composite according to the ninth aspect of the invention, which method is as defined in any one of claims 11, 12, 13 and 14.

The present invention is also described in the following with reference to preferred embodiments.

## Detailed description of the Invention

### • Aspect (1): First kit comprising composition (a) and composition (b)

According to the first aspect, the present invention relates to a first kit comprising two compositions which kit is described in the following. The kit comprises a composition (a) and a composition (b), wherein composition (a) and composition (b) are spatially separated from each other. Composition (a) and composition (b) comprise reactive components which are suitable for forming a first cured material by means of chemical reactions which take place when said composition (a) and said composition (b) are mixed to form a first silicone preparation and optionally heating said first silicone preparation. Said chemical reactions which result in curing of the first silicone preparation are (i) a transition metal-catalyzed hydrosilylation reaction between an olefinic carbon-carbon double bond and a hydrogen-silicon bond and (ii) a condensation reaction between two silicon-alkoxy groups, a silicon-alkoxy group and a silicon-hydroxyl group, or two silicon-hydroxyl groups which results in the formation of a silicon-oxygen-silicon moiety. The transition metal-catalyzed hydrosilylation reaction can be regarded as representing an addition reaction of a hydrogen-silicon bond across an olefinic carbon-carbon double bond. Within the framework of the present invention, it is also referred to these chemical reactions (i) and (ii) as "addition reaction" (the transition metal-catalyzed hydrosilylation reaction) and "condensation reaction".

In order to prevent undesired premature curing reactions of some of the components used in the present invention, it is necessary to store these components spatially separated from each other, i.e. such that contact of these components is prevented. Therefore, these components are formulated as two compositions which are provided as a kit.

The first kit comprises a composition (a) and a composition (b), wherein composition (a) and composition (b) are spatially separated from each other and composition (a) and composition (b) comprise

| | |
|---|---|
| (A-1) | 100-350 parts by weight of a linear organopolysiloxane having terminal alkenyl groups and a molecular weight Mw of 3000 g/mol or more; |
| (A-2) | 25-100 parts by weight of an organohydrogenpolysiloxane having 5-300 siloxane repeating units, of which 2-100 repeating unit have Si-H bonds; |
| (A-3) | 0-150 parts by weight of hydrophobized silica that optionally has alkenyl groups on its surface; |
| (A-4) | 0-40 parts by weight of a linear organopolysiloxane having at least two alkenyl groups per molecule and having a molecular weight Mw of 3000 g/mol or more; |
| (A-5) | 0.1-1000 ppm of a hydrosilylation catalyst comprising a transition metal, expressed in terms of the weight of the transition metal relative to the total weight of components (A-1) to (A-4); |
| (B-1) | 200-450 parts by weight of a silicone resin containing at least one group $-SiR^9_b Y_{3-b}$, wherein $R^9$ is a hydrocarbon group having 1-20 carbon atoms, that is optionally substituted with an acryloyl group, a methacryloyl group, or a combination of these; Y is a hydroxyl group or a hydrolysable group selected from halogen and an alkoxy group having 1-3 carbon atoms, b is 0, 1 or 2; |
| (B-2) | 25-125 parts by weight of an organic polymer having at least two groups $-SiR^6_a X_{3-a}$ attached to its polymer backbone, wherein $R^6$ is a hydrocarbon group having 1-20 carbon atoms, X is a hydroxyl group or a hydrolysable group selected from halogen and an alkoxy group having 1-3 carbon atoms, a is 0, 1 or 2, and the polymer backbone is selected from a polyether, polyurethane, polyacrylate poly(meth)acrylate, saturated polyolefin and polyester; |
| (B-3) | 0-25 parts by weight of a silane component selected from $Si(O-R^7)_4$, $(R^8)Si(O-R^7)_3$ and a combination of these, wherein $R^7$ is a linear or branched alkyl group having 1-4 carbon atoms and $R^8$ is a linear or branched alkyl group having 1-4 carbon atoms, a linear or branched alkyl group having 1-4 carbon atoms which is substituted with $H_2C=CH-C(=O)-O-$ or a linear or branched alkyl group having 1-4 carbon atoms which is substituted with $H_2C=C(CH_3)-C(=O)-O-$; and |
| (B-4) | 0.5-5 % by weight of a condensation reaction catalyst, relative to the total weight of components (B-1), (B-2) and (B-3); |
| (C) | 150-400 parts by weight of a filler; |

wherein the total amount of components (A-1) to (A-4), (B-1), (B-2) and (B-3) and (C) is 1000 parts by weight and the total weight of components (A-1) to (A-5), (B-1) to (B-4) and (C) is at least 75 % by weight of the total weight of compositions (a) and (b),

with the proviso that the following components are not present together in one of composition (a) and composition (b): (A-2) and (A-5); (B-4) and one or more of (B-1), (B-2), (B-3).

In preferred embodiments, the total weight of components (A-1) to (A-5), (B-1) to (B-4) and (C) is at least 80 % by weight of the total weight of compositions (a) and (b), preferably at least 85 % by weight, more preferably at least 90 % by weight, even more preferably at least 95 % by weight, still more preferably at least 97 % by weight or even 98 % by weight and most preferably 100 % by weight.

In the first kit, the molar amount of Si-H bonds in component (A-2) relative to the molar amount of alkenyl groups in component (A-1), (A-3) and (A-4) is preferably in the range of 0.9-7, more preferably 1-6, even more preferably 1-5, still more preferably 1-3, most preferably 1-2.5 .

In preferred embodiments, composition (a) and composition (b) comprise 150-300 parts by weight of (A-1) and/or 50-90 parts by weight of (A-2) and/or 20-100 parts by weight of (A-3) and/or 5-20 parts by weight of (A-4) and/or 220-400 parts by weight of (B-1) and/or 0-125 parts by weight of (B-2) and/or 0-15 parts by weight of (B-3) and/or 200-350 parts by weight of (C).

In more preferred embodiments, composition (a) and composition (b) comprise

150-300 parts by weight of (A-1),
50-90 parts by weight of (A-2),
20-100 parts by weight of (A-3), and
5-20 parts by weight of (A-4).

In alternative more preferred embodiments, composition (a) and composition (b) comprise 220-400 parts by weight of (B-1),

30-125 parts by weight of (B-2), and
0-15 parts by weight of (B-3).

In even more preferred embodiments, composition (a) and composition (b) comprise

150-300 parts by weight of (A-1),
50-90 parts by weight of (A-2),
20-100 parts by weight of (A-3),
5-20 parts by weight of (A-4),
220-400 parts by weight of (B-1),
30-125 parts by weight of (B-2), and
0-15 parts by weight of (B-3).

In the following, the components of composition (a) and composition (b) of the first kit according to the first aspect of the invention are described.

**(A-1) Linear organopolysiloxane having terminal alkenyl groups**

Component (A-1) is a linear organopolysiloxane having terminal alkenyl groups and a molecular weight Mw of 3000 g/mol or more. As the organopolysiloxane is linear and the alkenyl groups are terminal, it is clear that each molecule contains two alkenyl groups.

In preferred embodiments, component (A-1) is a linear organopolysiloxane of formula (I)

$$R^2\text{-}(Si(R^1)_2)\text{-}(O\text{-}Si(R^1)_2)_p\text{-}(O\text{-}Si(R^1)_2)\text{-}R^2 \qquad (I)$$

, wherein

each $R^1$ independently represents a linear or branched alkyl group having 1-4 carbon atoms,
each $R^2$ independently represent a linear alkenyl group having 2-6 carbon atoms, and p represents a numerical value in the range of 30-2000.

Preferably, each $R^1$ independently represents a linear or branched alkyl group having 1-3 carbon atoms, more preferably each $R^1$ independently represents methyl or ethyl.

Preferably, each $R^2$ independently represents a linear alkenyl group having 2-4 carbon atoms, more preferably each $R^2$ independently represents a linear alkenyl group having 2 or 3 carbon atoms, even more preferably a linear alkenyl group having 2 carbon atoms.

Preferably, p represents a numerical value in the range of 40 to 1800, more preferably 50 to 1600, even more preferably 60 to 1400, still more preferably 70 to 1000.

In more preferred embodiments, each $R^1$ represents methyl, each $R^2$ independently represents a linear alkenyl group having 2 carbon atoms and p represents a numerical value in the range of 40-1800, preferably 50-1400, more preferably 60-1000, even more preferably 70-800, most preferably 80-600.

Preferably, component (A-1) has a weight-average molecular weight Mw of 3000-100000 g/mol, more preferably 4000-70000 g/mol, even more preferably 5000-40000 g/mol and most preferably 5000-30000 g/mol.

The molecular weight distribution of component (A-1) is not particularly limited and can be narrow or broad. The molecular weight distribution can be monomodal, bimodal or trimodal. For instance, viscosity of component (A-1) can be adjusted by suitably adjusting the molecular weight distribution of the component. The viscosity can be adjusted by mixing two or more compounds representing embodiments of component (A-1). By mixing two or more compounds representing embodiments of component (A-1), bimodal or trimodal molecular weight distribution can be set which can be advantageous in order to control viscosity of the component and viscosity of a composition comprising said component. This is known to the skilled person.

### (A-2) Organohydrogenpolysiloxane

Component (A-2) is an organohydrogenpolysiloxane having 5-300 siloxane repeating units, of which 2-100 repeating unit have Si-H bonds. Component (A-2) can have a linear structure, a cyclic structure, a branched structure or a three-dimensional network structure.

In preferred embodiments, component (A-2) has a composition represented by formula (II)

$$R^3_q H_r SiO_{(4-q-r)/2} \qquad (II)$$

wherein

q and r each are numerical values fulfilling the conditions

$$0.7 \le q \le 2.1,$$

$$0.01 \le r \le 1.0,$$

$$0.8 \le q + r \le 3.0,$$

$R^3$ independently represents a linear or branched alkyl group having 1-4 carbon atoms.

Preferably, q and r each are numerical values fulfilling the conditions

$$0.8 \le q \le 2.0,$$

$$0.10 \le r \le 1.0,$$

$$1.0 \le q + r \le 2.5;$$

more preferably q and r each are numerical values fulfilling the conditions

$$0.8 \le q \le 2.0,$$

$$0.20 \le r \le 1.0,$$

$$1.0 \leq q + r \leq 2.5.$$

In more preferred embodiments, component (A-2) has a composition represented by formula (II) in which $R^3$ independently represents a linear or branched alkyl group having 1-3 carbon atoms, wherein even more preferably $R^3$ independently represents a methyl group or an ethyl group, most preferably a methyl group.

In other preferred embodiments, component (A-2) is an organohydrogenpolysiloxane comprising at least one terminal SiH group as represented by $-(O-Si(R^3)_2)$-H, at least one non-terminal SiH group as represented by $-(O-SiHR^3)$-, at least one non-terminal $SiH_2$ group as represented by $-(O-SiH_2)$-, or a combination of these. Thus, component (A-2) can be a linear organohydrogenpolysiloxane selected from the group consisting of formula (IIIa), formula (IIIb), formula (IVa), formula (IVb), formula (IVc) or a combination of these,

$$H-(Si(R^3)_2)-(O-Si(R^3)_2)_s-(O-Si(R^3)_2)-H \qquad (IIIa)$$

, wherein
s is a numerical value in the range of 5-300;

$$H-(Si(R^3)_2)-\{(O-SiHR^3)_{t1}-(O-Si(R^3)_2)_{s1}\}-(O-Si(R^3)_3) \qquad (IIIb)$$

, wherein

s1 is a numerical value in the range of 0-300,
t1 is a numerical value in the range of 1-200, and
the curly brackets {} indicate that the sequence of the repeating units $-(O-SiHR^3)$- and $-(O-Si(R^3)_2)$- relative to each other is not limited;

$$((R^3)_3Si)-\{-(O-SiHR^3-)_{t2}-(O-Si(R^3)_2-)_{s2}\}-(O-Si(R^3)_3) \qquad (IVa)$$

, wherein

s2 is a numerical value in the range of 0-300,
t2 is a numerical value in the range of 2-100, and
the curly brackets {} indicate that the sequence of the repeating units $-(O-SiHR^3)$- and $-(O-Si(R^3)_2)$- relative to each other is not limited;

$$((R^3)_3Si)-\{-(O-Si(R^3)_2-)_{s3}-(O-SiH_2-)_{t3}\}-(O-Si(R^3)_3) \qquad (IVb)$$

, wherein,

s3 is a numerical value in the range of 0-300
t3 is a numerical value in the range of 1-50, and
the curly brackets {} indicate that the sequence of the repeating units $-(O-SiH_2)$- and $-(O-Si(R^3)_2)$- relative to each other is not limited;

$$((R^3)_3Si)-\{-(O-Si(R^3)_2-)_{s4}-(O-SiH(R^3)-)_{t4}-(O-SiH_2-)_{t5}\}-(O-Si(R^3)_3) \qquad (IVc)$$

, wherein,

s4 is a numerical value in the range of 0-300,
t4 is a numerical value in the range of 1-99,
t5 is a numerical value in the range of 1-49,
$2 \leq t4 + 2 \cdot t5 \leq 100$, and

the curly brackets {} indicate that the sequence of the repeating units -(O-SiH$_2$)-, -(O-SiHR$^3$)- and -(O-Si(R$^3$)$_2$)- relative to each other is not limited;

and wherein

each R$^3$ independently represents a linear or branched alkyl group having 1-4 carbon atoms, preferably 1-3 carbon atoms, more preferably a methyl group or an ethyl group and most preferably a methyl group.

In more preferred embodiments, component (A-2) is (i) a linear organohydrogenpolysiloxane of formula (IIIa), wherein s is a numerical value in the range of 10-200, or (ii) a linear organohydrogenpolysiloxane of formula (IVa), wherein s2 is a numerical value in the range of 10-200, and t2 is a numerical value in the range of 2-50, or (iii) a combination of these.

In even more preferred embodiments, component (A-2) is (i) a linear organohydrogenpolysiloxane of formula (III), wherein s is a numerical value in the range of 15-150, or (ii) a linear organohydrogenpolysiloxane of formula (IVa), wherein s2 is a numerical value in the range of 15-150 and t2 is a numerical value in the range of 2-25, or (iii) a combination of these.

Component (A-2) preferably has a content of Si-H groups of 0.1-15 mmol/g, more preferably 0.3-2.5 mmol/g.

The molecular weight distribution of component (A-2) is not particularly limited and can be narrow or broad. The molecular weight distribution can be monomodal, bimodal or trimodal. For instance, viscosity of component (A-2) can be adjusted by suitably adjusting the molecular weight distribution of the component. The viscosity can be adjusted by mixing two or more compounds representing embodiments of component (A-2). By mixing two or more compounds representing embodiments of component (A-2), bimodal or trimodal molecular weight distribution can be set which can be advantageous in order to control viscosity of the component and viscosity of a composition comprising said component. This is known to the skilled person.

### (A-3) Hydrophobized silica

Component (A-3) is hydrophobized silica that optionally has alkenyl groups on its surface.

In preferred embodiments, component (A-3) is a silica powder having on its surface hydrophobic groups selected from linear or branched alkyl groups having 1-16 carbon atoms and preferably 1-4 carbon atoms, linear or branched alkenyl groups having 2-16 carbon atoms and preferably 2-4 carbon atoms or any combination of these. More preferably, component (A-3) is a silica powder having on its surface hydrophobic groups selected from linear or branched alkyl groups having 1-3 carbon atoms, linear or branched alkenyl groups having 2 or 3 carbon atoms or any combination of these. Even more preferably, the hydrophobic groups are selected from methyl groups, ethyl groups, vinyl groups, allyl groups and any combination of these, wherein methyl groups, vinyl groups and any combination of these are most preferred.

Preferably, component (A-3) is a silica powder having a BET surface of 50 m$^2$/g or more, more preferably 100 m$^2$/g or more, even more preferably 100-400 m$^2$/g.

The silica powder of component (A-3) is preferably selected from fumed silica and precipitated silica.

### (A-4) Linear organopolysiloxane having at least two alkenyl groups

Component (A-4) is a linear organopolysiloxane having at least two alkenyl groups per molecule and having a molecular weight Mw of 3000 g/mol or more.

In preferred embodiments, component (A-4) consists of the following substructures

$$((R^2)(R^1)_2SiO_{1/2})_w$$

$$((R^1)_3SiO_{1/2})_{2-w}$$

$$((R^1)_2SiO_{2/2})_u$$

$$((R^1)(R^2)SiO_{2/2})_v$$

wherein

each R$^1$ independently represents a linear or branched alkyl group having 1-4 carbon atoms, preferably 1-4 carbon atoms, wherein more preferably each R$^1$ independently represents methyl or ethyl,
each R$^2$ independently represent a linear alkenyl group having 2-6 carbon atoms, preferably 2-4 carbon atoms, more preferably 2 or 3 carbon atoms, most preferably 2 carbon atoms, and u represents a numerical value fulfilling

the condition $30 \leq u \leq 1300$,
v represent a numerical value fulfilling the condition $(2\text{-}w) \leq v \leq 170$,
w represents 0, 1 or 2, wherein w preferably represent 0 or 1.

In more preferred embodiment s, u represents a numerical value in the range of 40 to 1000, preferably 50 to 800, more preferably 60 to 700, even more preferably 70 to 600.

In further preferred embodiments, v represents a numerical value in the range of 2 to 160, preferably 5 to 150, more preferably 10 to 140, even more preferably 15 to 130.

In yet further preferred embodiments, each $R^1$ represents methyl, each $R^2$ independently represents a linear alkenyl group having 2 carbon atoms, and w is 0.

It is likewise preferred that u represents a numerical value in the range of 300-600 and and v represents a numerical value in the range of 40-140, wherein more preferably u represents a numerical value in the range of 400-500, and v represents a numerical value in the range of 60-130.

Component (A-4) preferably has a molecular weight Mw of 5000-100000 g/mol, more preferably 10000-80000 g/mol. Even more preferably 15000-75000 g/mol and most preferably 20000-60000 g/mol.

The molecular weight distribution of component (A-3) is not particularly limited and can be narrow or broad. The molecular weight distribution can be monomodal, bimodal or trimodal. For instance, viscosity of component (A-3) can be adjusted by suitably adjusting the molecular weight distribution of the component. The viscosity can be adjusted by mixing two or more compounds representing embodiments of component (A-3). By mixing two or more compounds representing embodiments of component (A-3), bimodal or trimodal molecular weight distribution can be set which can be advantageous in order to control viscosity of the component and viscosity of a composition comprising said component. This is known to the skilled person.

**(A-5) Hydrosilylation catalyst**

The silicone preparation and one of compositions (a) and (b) comprises a hydrosilylation catalyst, i.e. a compound capable of catalyzing the addition reaction of an Si-H moiety to a carbon-carbon double bond. A hydrosilylation catalyst comprises a transition metal.

Component (A-5) is a hydrosilylation catalyst, i.e. a compound that mediates addition reactions between Si-H group containing component (A-2) and alkenyl group-containing components (A-1), (A-4), and, optionally (A-3).

This hydrosilylation reaction catalyst is exemplified by platinum group metal catalysts, including platinum catalysts such as platinum black, platinic chloride, reaction products of chloroplatinic acid ($H_2PtCl_6$) with monohydric alcohols, complexes of chloroplatinic acid and olefins, and platinum bisacetoacetate; palladium catalysts; and rhodium catalysts. A specific example of a hydrosilylation catalyst is commonly known as Karstedt's catalyst which is an organoplatinum compound derived from divinyl-containing disiloxane such as divinyltetramethyldisiloxane and chloroplatinic acid. In many cases, the exact nature of the catalytically active species may not be known and may be formed in situ from the chemical compound added to a reaction mixture. Therefore, the chemical compound added to a reaction mixture is often referred to as pre-catalyst. In the art of catalysis as well as within the present application, the terms "catalyst" and "pre-catalyst" are often used interchangingly. Hydrosilylation ctalysts are commonly known to the skilled person and are described in various publications including those representing common technical knowledge. Likewise, a description of hydrosilylation catalysts can be found in patent literature such as WO 2013/000788 A1.

This hydrosilylation catalyst is added in a catalytic amount. The amount, expressed in terms of the weight of the platinum group metal such as platinum, palladium or rhodium metal, is generally from 0.1 to 1,000 ppm, and especially from 1 to 200 ppm, based on the total weight of components (A-1) to (A-4).

**(B-1) Silicone resin**

Component (B-1) is a silicone resin containing at least one group $\text{-SiR}^9{}_b\text{Y}_{3\text{-}b}$, wherein $R^9$ is a hydrocarbon group having 1-20 carbon atoms, that is optionally substituted with an acryloyl group, a methacryloyl group, or a combination of these; Y is a hydroxyl group or a hydrolysable group selected from halogen and an alkoxy group having 1-3 carbon atoms, and b is 0, 1 or 2;

Preferably, component (B-1) has a weight-average molecular weight Mw in the range of 300-10000 g/mol, more preferably 400-8000 g/mol, even more preferably 450-6000 g/mol, still more preferably 400-5000 g/mol, yet more preferably 500-4000 g/mol.

In embodiments likewise preferred, component (B-1) comprises $(R^4)SiO_{3/2}$ units and, optionally, $(R^4)_3SiO_{1/2}$ units, $(R^4)_2SiO_{2/2}$ units, and $SiO_{4/2}$ units, wherein each $R^4$ is independently selected from the group consisting of linear or branched alkyl groups having 1-4 carbon atoms, preferably 1 or 2 carbon atoms, linear or branched alkoxy groups having 1-4 carbon atoms, preferably 1 or 2 carbon atoms, $H_2C=CH\text{-}C(=O)\text{-}O\text{-}R^5\text{-}$ (an acryloxy alkylene group) or

$H_2C=C(CH_3)-C(=O)-O-R^5-$ (a methacryloxy alkylene group), wherein $R^5$ represents a linear alkylene group having 1-6 carbon atoms, preferably 2-4 carbon atoms.

In more preferred embodiments, component (B-1) contains $(R^4)_3SiO_{1/2}$ units in a molar amount $[(R^4)_3SiO_{1/2}]$ and $(R^4)SiO_{3/2}$ units in a molar amount $[(R^4)SiO_{3/2}]$ and the molar ratio $[(R^4)_3SiO_{1/2}] : [(R^4)SiO_{3/2}]$ is lower than 1:3, preferably lower than 1:4.

In likewise more preferred embodiments, component (B-1) contains $(R^4)_3SiO_{1/2}$ units in a molar amount $[(R^4)_3SiO_{1/2}]$ and $SiO_{4/2}$ units in a molar amount $[SiO_{4/2}]$ and the molar ratio $[(R^4)_3SiO_{1/2}] : [SiO_{4/2}]$ is lower than 1:2.

In further preferred embodiments, component (B-1) contains $(R^4)SiO_{3/2}$ units in a molar amount $[(R^4)SiO_{3/2}]$ and $SiO_{4/2}$ units in a molar amount $[SiO_{4/2}]$ and the molar ratio $[(R^4)SiO_{3/2}] : [SiO_{4/2}]$ is in the range of from 1:100 - 100:1. In even more preferred embodiments, component (B-1) consists of $(R^4)SiO_{3/2}$ units.

In particularly preferred embodiments, component (B-1) has a molecular weight Mw of 2000-4000 g/mol and a content of alkoxy groups of 10-20 wt.-% and is obtainable by condensing methyltrimethoxysilan and 3-methacryloxypropyltrimethoxysilan in a molar ratio in the range of 80:20 - 95:5 under acid or base catalysis.

## (B-2) Organic polymer having at least two groups $-SiR^1_aX_{3-a}$

Component (B-2) is an organic polymer having at least two groups $-SiR^6_aX_{3-a}$ attached to its polymer backbone, wherein $R^6$ is a hydrocarbon group having 1-20 carbon atoms, X is a hydroxyl group or a hydrolysable group selected from halogen and an alkoxy group having 1-3 carbon atoms, a is 0, 1 or 2, and the polymer backbone is selected from a polyether, polyurethane, polyacrylate poly(meth)acrylate, saturated polyolefin and polyester.

Preferably, $R^6$ is an alkyl group having 1-6 carbon atoms, more preferably an alkyl group selected from methyl, ethyl, propyl, isopropyl, 1-butyl, 2-butyl, 2-methyl-1-propyl and 2-methyl-2-propyl, even more preferably an alkyl group selected from methyl, ethyl, propyl and isopropyl. Still more preferably, the group $-SiR^6_aX_{3-a}$ represents a group selected from trimethoxysilyl, triethoxysilyl, triisopropoxysilyl, dimethoxymethylsilyl, diethoxymethylsilyl and diisopropoxymethylsilyl.

The polymer backbone is preferably selected from a polyether, polyurethane, polyacrylate, poly(meth)acrylate, saturated polyolefin and polyester, each of which can be linear or branched, wherein the polymer backbone is preferably linear. The number average molecular weight Mn of the polymer backbone in component (B-2) preferably is in the range of 3000-100000 g/mol, more preferably 5000-50000 g/mol, even more preferably 10000-30000 g/mol.

The number of groups $-SiR^6_aX_{3-a}$ attached to the polymer backbone in component (B-2) is preferably in the range of 2-20, more preferably 3-15, even more preferably 4-10.

## (B-3) Silane component

Component (B-3) is a silane component selected from $Si(O-R^7)_4$, $(R^8)Si(O-R^7)_3$ and a combination of these, wherein $R^7$ is a linear or branched alkyl group having 1-4 carbon atoms and $R^8$ is a linear or branched alkyl group having 1-4 carbon atoms, a linear or branched alkyl group having 1-4 carbon atoms which is substituted with $H_2C=CH-C(=O)-O-$ or a linear or branched alkyl group having 1-4 carbon atoms which is substituted with $H_2C=C(CH_3)-C(=O)-O-$.

In preferred embodiments, component (B-3) is selected from $Si(O-R^7)_4$, $(R^8)Si(O-R^7)_3$ and a combination of these, wherein $R^7$ is a linear or branched alkyl group having 1-3 carbon atoms, preferably a linear alkyl group having 1 or 2 carbon atoms, and $R^8$ is a linear or branched alkyl group having 1-3 carbon atoms, preferably a linear alkyl group having 1 or 2 carbon atoms, a linear or branched alkyl group having 1-4 carbon atoms which is substituted with $H_2C=CH-C(=O)-O-$ or a linear or branched alkyl group having 1-4 carbon atoms which is substituted with $H_2C=C(CH_3)-C(=O)-O-$.

## (B-4) Condensation reaction catalyst

Component (B-4) is a condensation reaction catalyst, i.e. a compound that is suitable for mediating intermolecular and intramolecular reactions between components (B-1) to (B-3) in the course of which reactions Si-O-Si bonds are formed. Component (B-4) preferably is a compound comprising Ti, Zr, Al, Sn, or Zn.

More preferably, component (B-4) is a compound represented by $Mt(O-A1)_4$, wherein Mt represents Ti or Zr and A1 is selected from methyl, ethyl, n-propyl, i-propyl, 1-butyl, 2-butyl, 2-methyl-1-propyl and 2-methyl-2-propyl. Even more preferably, A1 is selected from methyl, ethyl, n-propyl, i-propyl and 1-butyl. Still more preferably, component (B-4) is a compound represented by $Mt(CL)_2$, wherein Mt represents Ti or Zr and CL represents a chelating ligand selected from acetylacetonate, ethyl acetoacetate and 2-ethylhexane-1,3-diolate.

## (C) Inorganic filler

Component (C) is an inorganic filler and is preferably selected from titanium oxide, iron oxide, cerium oxide, vanadium oxide, cobalt oxide, chromium oxide, manganese oxide, silicon dioxide, diatomaceous earth, calcium carbonate, magnesium carbonate, alumina, hollow glass beads, hollow resin beads, silicates, alumosilicates and any combination of these. More preferably, component (C) is selected from silicon dioxide, kaolinite and any combination of these. Even more preferably, component (C) is different from component (A-3).

In preferred embodiments, component (C) has attached to its surface groups selected from linear or branched alkyl groups having 1-16 carbon atoms, linear or branched alkoxy groups 1-16 carbon atoms, linear or branched alkyl groups substituted with $H_2C=CH-C(=O)-O-$ and having 1-16 carbon atoms, linear or branched alkoxy groups substituted with $H_2C=CH-C(=O)-O-$ and having 1-16 carbon atoms, linear or branched alkyl groups substituted with $H_2C=C(CH_3)-C(=O)-O-$ and having 1-16 carbon atoms, linear or branched alkoxy groups substituted with $H_2C=C(CH_3)-C(=O)-O-$ and having 1-16 carbon atoms, and any combination of these.

In more preferred embodiments, component (C) has attached to its surface groups selected from linear or branched alkyl groups having 1-6 carbon atoms, linear or branched alkoxy groups having 1-6 carbon atoms, linear or branched alkyl groups substituted with $H_2C=CH-C(=O)-O-$ and having 1-6 carbon atoms, linear or branched alkoxy groups substituted with $H_2C=CH-C(=O)-O-$ and having 1-6 carbon atoms, linear or branched alkyl groups substituted with $H_2C=C(CH_3)-C(=O)-O-$ and having 1-6 carbon atoms, linear or branched alkoxy groups substituted with $H_2C=C(CH_3)-C(=O)-O-$ and having 1-6 carbon atoms, and any combination of these.

In even more preferred embodiments, component (C) has attached to its surface groups selected from linear or branched alkyl groups having 1-4 carbon atoms, linear or branched alkoxy groups having 1-4 carbon atoms, linear or branched alkyl groups substituted with $H_2C=CH-C(=O)-O-$ and having 1-4 carbon atoms, linear or branched alkoxy groups substituted with $H_2C=CH-C(=O)-O-$ and having 1-4 carbon atoms, linear or branched alkyl groups substituted with $H_2C=C(CH_3)-C(=O)-O-$ and having 1-4 carbon atoms, linear or branched alkoxy groups substituted with $H_2C=C(CH_3)-C(=O)-O-$ and having 1-4 carbon atoms, and any combination of these.

**Further components**

Composition (a) and composition (b) can contain further components which are described in the following. However, the following description of further components is not limiting and/or exhaustive. Thus, other compounds, which represent additives commonly employed in the field of compositions containing reactive components as described above, can also be contained.

A retarder can be present in composition (a) or composition (b) of the first kit of the present invention and/or in composition (c) or composition (d) the second kit of the present invention. Within the framework of the present application, the term "retarder" relates to a compound reducing the catalytic activity of the hydrosilylation catalyst. A retarder can be present in a silicone preparation comprising compounds curable by the action of a hydrosilylation catalyst in order to adjust the reaction rate of the curing reaction, for instance in order to adjust the pot life of the preparation and/or in order to adjust the reaction rate of the hydrosilylation curing reaction relative to the rate of other curing reactions such as a curing reaction by a polycondensation reaction. In the present invention, the retarder is contained in one of composition (a) or (b), wherein the retarder is preferably contained in the composition that does not comprise the hydrosilylation catalyst (A-5).

As exemplary compounds suitable as a retarder, the following can be mentioned. Acetylenic alcohols such as methyl butynol, ethynyl cyclohexanol, dimethyl hexynol, and 3,5-dimethyl-1-hexyn-3-ol, 1-butyn-3-ol, 1-propyn-3-ol, 2-methyl-3-butyn-2-ol, 3-methyl-1-butyn-3-ol, 3-methyl-1-pentyn-3-ol, 3-phenyl-1-butyn-3-ol, 4-ethyl-1-octyn-3-ol, 3,5-dimethyl-1-hexyn-3-ol, and 1-ethynyl-1-cyclohexanol, and a combination thereof; cycloalkenylsiloxanes such as methylvinylcyclosiloxanes exemplified by 1,3,5,7-tetramethyl-1,3,5,7-tetravinylcyclotetrasiloxane, 1,3,5,7-tetramethyl-1,3,5,7- tetrahexenylcyclotetrasiloxane, and a combination thereof; ene-yne compounds such as 3- methyl-3-penten-1-yne, 3,5-dimethyl-3-hexen-1-yne; triazoles such as benzotriazole; phosphines; mercaptans; hydrazines; amines such as tetramethyl ethylenediamine, dialkyl fumarates, dialkenyl fumarates, dialkoxyalkyl fumarates, maleates such as diallyl maleate, and a combination thereof.

As an alternative or in addition the aforementioned compounds, a silylated acetylenic compound may be used as a retarder. Without wishing to be bound by theory, it is thought that adding a silylated acetylenic compound reduces yellowing of the reaction product prepared from hydrosilylation reaction of the preparation as compared to a reaction product from hydrosilylation of a preparation that does not contain a silylated acetylenic compound or that contains an organic acetylenic alcohol retarder, such as those described above.

The silylated acetylenic compound is exemplified by (3-methyl-1-butyn-3-oxy)trimethylsilane, ((1,1-dimethyl-2-propynyl)oxy)trimethylsilane, bis(3-methyl-1-butyn-3-oxy)dimethylsilane, bis(3-methyl-1-butyn-3-oxy)silanemethylvinylsilane, bis((1,1-dimethyl-2-propynyl)oxy)dimethylsilane, methyl(tris(1,1-dimethyl-2-propynyloxy))silane, methyl(tris(3-methyl-1-butyn-3-oxy))silane, (3-methyl-1-butyn-3-oxy)dimethylphenylsilane, (3-methyl-1-butyn-3-oxy)dimethylhexenylsilane, (3-methyl-1-butyn-3-oxy)triethylsilane, bis(3-methyl-1-butyn-3-oxy)methyltrifluoropropylsilane, (3,5-dimethyl-1-hexyn-3-oxy)trimethylsilane, (3-phenyl-1-butyn-3-oxy)diphenylmethylsilane, (3-phenyl-1-butyn-3-oxy)dimethylphenylsilane, (3-phenyl-1-butyn-3-oxy)dimethylvinylsilane, (3-phenyl-1-butyn-3-oxy)dimethylhexenylsilane, (cyclohexyl-1-ethyn-1-oxy)dimethylhexenylsilane, (cyclohexyl-1-ethyn-1-oxy)dimethylvinylsilane, (cyclohexyl-1-ethyn-1-oxy)diphenylmethylsilane, (cyclohexyl-1-ethyn-1-oxy)trimethylsilane, and combinations thereof. Alternatively, ingredient (I) is exemplified by methyl(tris(1,1-dimethyl-2-propynyloxy))silane, ((1,1-dimethyl-2-propynyl)oxy)trimethylsilane, or a combination thereof. The silylated acetylenic compound useful as ingredient (I) may be prepared by methods known in the art, such as silylating an acetylenic alcohol described above by reacting it with a chlorosilane in the presence of an acid receptor.

The amount of retarder added to the composition will depend on various factors including the desired pot life of the composition, the particular retarder used, and the specific components (A-1), (A-2), (A-3), (A-4), and (A-5) and their respective reactivity. When present, the amount of retarder may range from 0 % to 1 %, alternatively 0.001 % to 0.5 %, alternatively 0.0025 % to 0.25 %, and alternatively 0.005 % to 0.02 %, based on the weight of all components (A-1), (A-2), (A-3), (A-4), and (A-5) of compositions (a) and (b) and/or compositions (c) and (d).

Additives such as a light-resistant stabilizer, an ultraviolet absorber, a storage stabilizer, and a lubricant may be added, if necessary, to the composition (a) and/or (b) as well as to the composition (c) and/or (d) of the present invention as long as the effects of the present invention are not impaired.

Examples of the light-resistant stabilizer include hindered phenol antioxidants and hindered amine light stabilizers free of sulfur and phosphorus atoms and primary and secondary amines. The term "light-resistant stabilizer" as used herein refers a compound having a function to absorb light having a wavelength in the ultraviolet range to inhibit generation of radicals, a function to capture radicals generated by absorption of light and convert the radicals into thermal energy to detoxify them, or the like function, thus increasing stability to light.

The ultraviolet absorber is not particularly limited, and examples include benzoxazine ultraviolet absorbers, benzophenone ultraviolet absorbers, benzotriazole ultraviolet absorbers, and triazine ultraviolet absorbers. The term "ultraviolet absorber" as used herein refers to a compound having a function to absorb light having a wavelength in the ultraviolet range to inhibit generation of radicals.

The amounts of the light-resistant stabilizer and the ultraviolet absorber in the present invention are each preferably at least 0.01 parts by weight but not more than 5 parts by weight, more preferably at least 0.1 parts by weight but not more than 3 parts by weight, still more preferably at least 0.3 parts by weight but not more than 2.0 parts by weight, per 100 parts by weight of components (A-1) to (A-5), (B-1) to (B-4) and (C) of composition (a) and (b) or components (A-1) to (A-5), (B-3), (B-4) and (C) of composition (c) and (d), respectively, in order to easily provide the effect of reducing the increase in surface tackiness with time.

Preferred examples of the storage stability improving agent include compounds containing aliphatic unsaturated bonds, organophosphorus compounds, organosulfur compounds, nitrogen-containing compounds, tin compounds, and organic peroxides, which may be used alone or in combinations of two or more. Specific examples include 2-benzothiazolyl sulfide, benzothiazole, thiazole, dimethylacetylene dicarboxylate, diethylacetylene dicarboxylate, 2,6-dit-butyl-4-methylphenol, butylhydroxyanisole, vitamin E, 2-(4-morphodinyldithio)benzothiazole, 3-methyl-1-buten-3-ol, acetylenic unsaturated group-containing organosiloxanes, acetylene alcohol, 3-methyl-1-butyn-3-ol, 2-methyl-3-butyn-2-ol, diallyl fumarate, diallyl maleate, diethyl fumarate, diethyl maleate, dimethyl maleate, 2-pentenenitrile, and 2,3-dichloropropene.

A lubricant can be incoporated into a one or both of compositions (a) and (b) for instance in order to improve the compatibility of the components present in compositions (a) and (b) as well as in the silicone preparation obtained by mixing said compositions (a) and (b). With the use of a lubricant, it is also possible to adjust properties of the surface of the cured material prepared from the silicone preparation such as the friction coefficient, hydrophilicity and the tendency to build up static electricity. The build-up of static electricity commonly results in the attraction and adhesion of dust particles on the surface of a cured material. Thus, the addition of a lubricant reducing the tendency to build up static electricity can improve the appearance of the cured material over an extended period of time.

The lubricant is preferably a liquid lubricant. Specific examples of the liquid lubricant include paraffinic mineral oils, naphthenic mineral oils, animal or vegetable oils such as fatty acid glycerides, olefinic lubricants having an alkyl structure such as poly-1-decene and polybutene, alkyl aromatic lubricants having an aralkyl structure, polyalkylene glycol lubricants, ether lubricants such as polyalkylene glycol ethers, perfluoropolyethers, and polyphenyl ethers, ester lubricants having an ester structure such as aliphatic acid esters, aliphatic acid diesters, polyol esters, silicic acid esters, and phosphoric acid esters, silicone lubricants such as dimethyl silicone (i.e. dimethyl polysiloxane capped with a trimethylsiloxy group at both ends) and silicone oils in which the methyl groups of dimethyl silicone are partially replaced with a polyether, phenyl, alkyl, aralkyl, fluorinated alkyl, or other groups, and fluorine atom-containing lubricants such as chlorofluorocarbon. These lubricants may be used alone or in combinations of two or more.

In the present invention, silicone lubricants are preferred among these in particular in view of the decrease in frictional coefficient and tendency to build up static electricity, their dispersibility, processability, safety, and other standpoints. Silicone oils containing alkylene polyether side chains attached to a polysiloxane backbone such as polydimethylsiloxane containing side chains derived from ethylene oxide ("EO", oxirane) and/or propylene oxide ("PO", methyl oxirane) are particularly preferred in this regard. Silicone oils of this type are commercially available from CHT Germany GmbH (Tubingen) under the tradename Hansa Add such as Hansa Add 1060-RP, for instance.

The amount of the lubricant per 100 parts by weight of the components (A-1) to (A-5), (B-1) to (B-4) and (C) can be as low as 0.1 parts by weight and is preferably 0.2 part by weight or more, more preferably 0.4 parts by weight or more, still more preferably 0.8 parts by weight or more. If the amount is less than 0.1 part by weight, the lubricant can usually not sufficiently influence the abovementioned properties. The upper limit of the amount of the lubricant is not particularly limited as long as bleeding of the lubricant from the cured material does not occur. Therefore, the amount is preferably 20 parts by weight or less, more preferably 15 parts by weight or less.

Furthermore, a colorizing additive can be incoporated into one or both of compositions (a) and (b) in order to impart any desired color to one or both of the compositions, the silicone preparation obtainable by mixing the compositions (a) and (b) and the cured material obtainable by curing said silicone preparation. The colorizing additive can be any individual compound suitable for imparting a desired color or a combination of two or more of such compounds. The colorizing additve can in particular be selected from any dyes and pigments commonly known in the art. The amount of the colorizing additives relative to the components (A-1) to (A-5), (B-1) to (B-4) and (C) is suitably adjusted as required in order to impart the desired color in the desired intensity. Usually, it is therefore preferred that the colorizing additive is contained in an amount of 1 parts by weight or more, more preferably 2 parts by weight or more and still more preferably 3 parts by weight or more per 100 parts by weight of the components (A-1) to (A-5), (B-1) to (B-4) and (C). The upper limit of the amount of the colorizing agent is not particularly limited as long as the overall properties of the compositions (a) and/or (b), the silicone preparation obtainable by mixing the compositions (a) and (b) and the cured material obtainable by curing said silicone preparation are not deteriorated. Furthermore, the upper limit of the amount of a specific colorizing agent or a specific combination of colorizing agents is usually reached when a further increase of the intensity of a color cannot be achieved by further increasing the amount of colorizing agents. can be determined . Under these considerations, the amount is preferably 20 parts by weight or less, more preferably 15 parts by weight or less, still more preferably 10 parts by weight or less per 100 parts by weight of the components (A-1) to (A-5), (B-1) to (B-4) and (C) compositions (a) and (b).

This first kit described above as the first aspect of the present invention can be advantageously used in applications which are described in the following as further aspects of the present invention.

**• Aspect (2): First silicone preparation**

According to the second aspect of the present invention, a first silicone preparation is provided. The first silicone preparation is obtainable by mixing composition (a) and composition (b) of the first kit. Mixing of said compositions (a) and compositions (b) can be effected by means of any mixing technique commonly employed. Mixing can be employed in continuous or discontinuous (i.e. batch-wise) manner. For instance, a static mixer can be conveniently employed.

The first silicone preparation hence contains components which tend to react with each other, in particular components (A-2) and (A-5), which tend to react with each other and, furthermore, component (A-5) with components (A-1), (A-3) and (A-4), and component (B-4), which tends to mediate a reaction of components (B-1), (B-2) and (B-3) which tend to react with themselves in an intermolecular and/or intramolecular manner and, likewise, with each other. The reaction rate of these reactions can furthermore be influenced by the temperature of the silicone preparation and by the incorporation of a retarder as described above. A lower temperature of the silicone preparation and/or a higher amount of retarder usually results in a decresed tendency of the aforementioned reaction to occur. The amount of retarder as well as the specific typ of retarder and the temperature of mixing composition (a) and comp (a) and composition (b) and the temperature at which the silicone preparation is subsequently stored are adjusted appropriately in order to adjust the pot life of the silicone preparation.

The term "pot life" commonly relates to the period of time during which a mixture of reactive components can be processed. After expiry of the pot life, the reactions occurring in the mixture have proceeded to such an extent that further processing become impossible or at least impractical because it is no longer possible to obtain a work product that has a satisfactory quality. For instance, the viscosity of the mixture can have increased to such an extent that the mixture can no longer be removed from the vessel in which mixing the mixture was stored after and/or can no longer be applied in the form of a coating having a smooth surface.

The expiry of pot life can be determined for an exemplary mixture by measuring storage modulus G' and loss modulus G" and observing the change of these parameters over time, wherein the point of time at which the mixture was prepared is the starting point of this observation. In most cases, the storage modulus G' is lower than the loss modulus G" during a first period of time after the mixture was prepared and, thus, the ratio $\tan \delta = G''/G'$ is higher than 1. As time elapses and the reactions within the micture proceed, G' becomes higher than G" and the ratio $\tan \delta = G''/G'$ is lower than 1. The endpoint of pot life is usually the time expired after preparing the mixture at which G" = G' such that $\tan \delta = 1$. In highly viscous mixtures, a case may occur in which G' is higher than G" at the point of time at which the mixture was prepared. In this case, the endpoint of pot life is reached when at least one of G' and G" increases significantly. For instance, the endpoint of pot life can be regarded as being reached when the the rate at which at least one of G' and G" increases reaches a maximum.

**• Aspect (3): Method of curing the first silicone preparation**

According to the third aspect of the present invention, a method of curing the first silicone preparation is provided. Curing can be effected by heating the first silicone preparation such that the rates of the reactions between the components (A-1) to (A-4), which are mediated by component (A-5), and the reactions between the components (B-1) to (B-3), which are mediated by component (B-4), are increased and the reactions are driven to completeness.

The method of curing according to the third aspect the present invention comprises a step of heating the first silicone preparation to a temperature in the range of 100-200 °C, preferably 120-190 °C, more preferably 130-180 °C, most preferably 140-170 °C. Heating is preferably conducted over a period of 0.5-5 minutes, more preferably 1-3 minutes, most preferably 1-2 minutes.

**• Aspect (4): First cured material**

According to the fourth aspect of the present invention, a first cured material is provided. The first cured material is obtainable from the first silicone preparation by curing i.e. by effecting a reaction between components (A-1), (A-3) and (A-4) with (A-2) and, likewise of components (B-1), (B-2) and (B-3) of the silicone preparation such that a three-dimensional molecular network is formed. Curing can be effected by the method according to the third aspect of the invention.

Thus, the first cured material is obtainable from the first silicone preparation by heating the silicone preparation to a temperature in the range of 100-200°C, preferably 120-190 °C, more preferably 130-180 °C, most preferably 140-170 °C, wherein the heating is preferably conducted over a period of 0.5-5 minutes, more preferably 1-3 minutes, most preferably 1-2 minutes.

The first cured material is particularly suitable as a topcoat layer of a multilayer composite because it has advantageous mechanical properties (such as excellent abrasion resistance and bending resistance), light resistance, aging resistance and pleasant hand.

**• Aspect (5): Second kit comprising composition (c) and (d)**

According to the fifth aspect of the present invention, a second kit comprising composition (c) and (d) is provided. The second kit comprises a composition (c) and a composition (d), wherein composition (c) and composition (d) are spatially separated from each other. Composition (c) and composition (d) comprise reactive components. which are suitable for forming a second cured material by means of chemical reactions which take place when said composition (c) and said composition (d) are mixed to form a second silicone preparation and optionally heating said second silicone preparation.

In order to prevent undesired premature curing reactions of some of the components used in the present invention, it is necessary to store these components spatially separated from each other, i.e. such that contact of these components is prevented. Therefore, these components are formulated as two compositions which are provided as a kit.

The second kit comprises a composition (c) and a composition (d), wherein composition (c) and composition (d) are spatially separated from each other and composition (c) and composition (d) comprise

400-800 parts by weight of component (A-1) as described hereinabove with respect to the first kit according to the present invention;

10-200 parts by weight of component (A-2) as described hereinabove with respect to the first kit according to the present invention;

0-300 parts by weight of component (A-3) as described hereinabove with respect to the first kit according to the present invention;

0-40 parts by weight of component (A-4) as described hereinabove with respect to the first kit according to the present invention;

0.1-1000 ppm of component (A-5) as described hereinabove with respect to the first kit according to the present invention, wherein the amount is expressed in terms of the weight of the transition metal relative to the total weight of components (A-1) to (A-4);

0.5-50 parts by weight of component (B-3) as described hereinabove with respect to the first kit according to the present invention;

0.5-5 % by weight of component (B-4) as described hereinabove with respect to the first kit according to the present invention, wherein the amount relative to the total weight of component (B-3);

0-400 parts by weight of component (C) as described hereinabove;

wherein the total amount of components (A-1) to (A-4), (B-3), (B-4) and (C) is 1000 parts by weight and the total weight of components (A-1) to (A-5), (B-3), (B-4) and (C) is at least 75 % by weight of the total weight of compositions (c) and (d),
with the proviso that the following components are not present together in one of composition (c) and composition (d): (A-2) and (A-5); (B-4) and (B-3).

In preferred embodiments, the total weight of components (A-1) to (A-5), (B-3), (B-4) and (C) is at least 80 % by weight of the total weight of compositions (a) and (b), preferably at least 85 % by weight, more preferably at least 90 % by weight, even more preferably at least 95 % by weight, still more preferably at least 97 % by weight or even 98 % by weight and most preferably 100 % by weight.

In the second kit, the molar amount of Si-H bonds in component (A-2) relative to the molar amount of alkenyl groups in component (A-1), (A-3) and (A-4) is preferably in the range of 0.9-7, more preferably 1-6, even more preferably 1-5, still more preferably 1-3, most preferably 1-2.5 .

Composition (c) and composition (d) can also contain any one of the further components described hereinabove with respect to the fist kit of the present invention. However, the description of further components is not limiting and/or exhaustive. Thus, other compounds, which represent additives commonly employed in the field of compositions containing reactive components as described above, can also be contained.

**• Aspect (6): Second silicone preparation**

According to the sixth aspect of the present invention, a second silicone preparation is provided. The second silicone preparation is obtainable by mixing composition (c) and composition (d) of the second kit. Mixing of said compositions (c) and compositions (d) can be effected by means of any mixing technique commonly employed. Mixing can be employed in continuous or discontinuous (i.e. batch-wise) manner. For instance, a static mixer can be conveniently employed.

The second silicone preparation hence contains components which tend to react with each other, in particular components (A-2) and (A-5), which tend to react with each other and, furthermore, component (A-5) which mediates a reaction of components (A-1), (A-2), (A-3) and (A-4). Furthermore, component (B-4) tends to mediate intermolecular and/or intramolecular reactions of component (B-3). The reaction rate of these reactions can furthermore be influenced by the temperature of the silicone preparation and by the incorporation of a retarder as described above. A lower temperature of the silicone preparation and/or a higher amount of retarder usually results in a decresed tendency of the aforementioned reaction to occur. The amount of retarder as well as the specific typ of retarder and the temperature of mixing composition (a) and comp (a) and composition (b) and the temperature at which the silicone preparation is subsequently stored are adjusted appropriately in order to adjust the pot life of the silicone preparation.

**• Aspect (7): Method of curing the second cured material**

According to the seventh aspect of the present invention, a method of curing the second silicone preparation is provided.

Curing can be effected in the same manner as for the first silicone preparation, namely by heating the silicone preparation such that the rates of the reactions between the components are increased and the reactions are driven to completeness. Thus, the method of curing according to the seventh aspect the present invention comprises a step of heating the first silicone preparation to a temperature in the range of 100-200 °C, preferably 120-190 °C, more preferably 130-180 °C, most preferably 140-170 °C. Heating is preferably conducted over a period of 0.5-5 minutes, more preferably 1-3 minutes, most preferably 1-2 minutes.

**• Aspect (8): Second cured material**

According to the eighth aspect of the present invention, a second cured material is provided. The second cured material is obtainable from the second silicone preparation by curing, i.e. by effecting a reaction between components (A-1), (A-3) and (A-4) with (A-2) and, likewise of component (B-3) of the silicone preparation such that a three-dimensional molecular network is formed. Curing can be effected by the method according to the third aspect of the invention.

Thus, the second cured material is obtainable from the second silicone preparation by heating the silicone preparation to a temperature in the range of 100-200°C, preferably 120-190 °C, more preferably 130-180 °C, most preferably 140-170 °C, wherein the heating is preferably conducted over a period of 0.5-5 minutes, more preferably 1-3 minutes, most preferably 1-2 minutes.

The second cured material is particularly suitable as an adhesive layer and a basecoat layer of a multilayer composite of which the topcoat layer obtainable from the first silicone preparation forms the uppermost layer. It was found that the topcoat layer and the basecoat layer interact with each other such that the mechanical properties of the topcoat layer are improved in comparison to the topcoat layer alone. For instance, the second cured material can have a Shore A hardness of 30-60, a tensile strength (measured according to DIN 53504 S3 A after 14 days of storage at 23 °C and 50 % relative humidity) of 3 N/mm$^2$ or higher, an elongation at break (measured according to DIN 53504 S3 A after 14 days of storage at 23 °C and 50 % relative humidity) of 150 % or higher and a resistance to further tearing (measured according to ASTM D 624 form B after 14 days of storage at 23 °C and 50 % relative humidity) of 8 N/mm or higher. These advantageous mechanical properties render the second cured material suitable for being used as a basecoat layer which provides advantageous mechanical properties to a combination of a basecoat layer of the second cured material and a topcoat layer of the first cured material. Thus, the combination of a basecoat layer of the second cured and a topcoat layer of the first cured material can thus provide a durable coating which has pleasant hand. By means of an optional adhesive layer, this combination of a basecoat layer of the second cured and a topcoat layer of the first cured material can be bonded to essentially any backing material, in particular to a textile backing material or a leather backing material. The silicone preparation from which the second cured material is formed can have the same constitution or a different constitution, if the cured material is used as an adhesive layer or a basecoat layer.

**• Aspect (9): Multilayer composite**

According to the ninth aspect of the present invention, a multilayer composite is provided which is described in the following.

The multilayer composite comprises

(i) a backing material;
(ii) optionally an adhesive layer obtainable by curing the second silicone preparation as described hereinabove;
(iii) a basecoat layer obtainable by curing the second silicone preparation as described hereinabove, wherein the second silicone preparation for forming the basecoat layer can have the same or different constitution as the second silicone preparation for forming the adhesive layer;
(iv) a topcoat layer obtainable by curing the first silicone preparation as described hereinabove; wherein the backing material, the optional adhesive layer, the basecoat layer and the topcoat layer are present in the order in which they are mentioned.

In preferred embodiments, the backing material is a textile material, which can comprise natural fibers, synthetic fibers or a combination of these, or leather. The textile material can be a woven, knit, crocheted, knotted, felted, braided or non-woven textile material.

In more preferred embodiments, the natural fibers are selected from the group consisting of cotton, wool, hemp, sisal, flax, jute and any combination of these. In other more preferred embodiments the synthetic fibers are polymer fibers, wherein the polymer is selected from the group consisting of rayon, polyurethane, polyester, polypropylene, polyethylene, polyamide, polyacrylnitrile, polycarbonate and any combination of these.

In preferred embodiments, the optional adhesive layer, when present, has a coating weight of 10-100 g/m$^2$ and/or the basecoat layer has a coating weight of 100-500 g/m$^2$ and/or the topcoat layer has a coating weight of 5-50 g/m$^2$. In more preferred embodiments, the base coat layer has a coating weight of 100-500 g/m$^2$ and the topcoat layer has a coating weight of 5-50 g/m$^2$.

The multilayer composite can be part of a garment, footwear, glove, upholstery fabric, trim material, in particular a decorative or protective garment, a decorative or protective shoe or boot, a decorative or protective glove, an automotive interior trim material, a trim material or upholstery fabric of a seat, a trim material or upholstery fabric of a lounger. The multilayer composite according to the present invention is particularly suitable for being used as a trim material or upholstery fabric that is exposed to weathering, for instance as part of a seat or lounger that is used outdoors, in particular as a seat or lounger that is used outdoors in a maritime environment such as on board of a yacht or cruise liner. Similarly, the multilayer composite according to the present invention is particularly suitable for being used as a trim material or upholstery fabric that is exposed to other harsh conditions or treatments such as frequent cleaning with cleaning agents and/or disinfecting agents, for instance in a gastronomic business, hospital operations or similar surroundings.

**• Aspect (10): Method of preparing a multilayer multilayer composite**

According to the ninth aspect of the present invention, a method of preparing a multilayer composite as described hereinabove with respect to the ninth aspect of the invention is provided which is described in the following.

The method of preparing a multilayer composite comprises the steps of

(i) coating a second silicone preparation as described hereinabove onto a surface of a backing material,
(ii) curing the coating of the second silicone preparation in order to form a cured material as a basecoat layer,
(iii) coating a first silicone preparation as described hereinabove onto the surface of the first cured material of the basecoat layer formed in step (ii),
(iv) curing the coating of the first silicone preparation in order to form a topcoat layer.

In alternative embodiments, the method comprises the steps of

(i) coating a second silicone preparation as described hereinabove onto a surface of a backing material,
(ii) curing the coating of the second silicone preparation in order to form a second cured material as an adhesive layer,
(iii) coating a second silicone preparation as described hereinabove onto the surface of the second cured material of the adhesive layer formed in step (ii),
(iv) curing the coating of the second silicone preparation in order to form a second cured material as a basecoat layer,
(v) coating a first silicone preparation as described hereinabove onto the surface of the second cured material of the basecoat layer formed in step (iv),
(vi) curing the coating of the first silicone preparation in order to form a first cured material as a topcoat layer.

In preferred embodiments of the method, the second silicone preparation coated in step (i) has the same constitution as the second silicone preparation coated in step (iii).
In alternative embodiments, the method comprises the steps of

(i) coating a first silicone preparation as described hereinabove onto the surface of a release material,
(ii) curing the coating of the first silicone preparation in order to form a first cured material as a topcoat layer,
(iii) coating a second silicone preparation as described hereinabove onto the surface of the first cured material of the topcoat layer formed in step (ii),
(iv) curing the coating of the second silicone preparation in order to form a second cured material as a basecoat layer,
(v) coating a second silicone preparation as described hereinabove onto the surface of the second cured material of the basecoat layer formed in step (iv),
(vi) placing a backing material onto the second silicone preparation coating formed in step (v),
(vii) curing the coating of the second silicone preparation in order to form a second cured material as an adhesive layer,
(viii) removing the release material from the surface of the first cured material of the topcoat layer formed in step (ii).

In preferred embodiments of the method, the second silicone preparation coated in step (iii) has the same constitution as the second silicone preparation coated in step (v).
In more preferred embodiments of the method, the release material has a surface structure imparting a surface structure to the first cured material.
In further preferred embodiments, the adhesive layer has a coating weight of 10-100 $g/m^2$ and/or the base coat layer has a coating weight of 100-500 $g/m^2$ and/or the topcoat layer has a coating weight of 5-50 $g/m^2$. In more preferred embodiments, the base coat layer has a coating weight of 100-500 $g/m^2$ and the topcoat layer has a coating weight of 5-50 $g/m^2$.

## Examples

Within the framework of the invention disclosed in the present application, parameters were determined according to the following methods.

Molecular weight Mw:

The molecular weight Mw of any siloxane and silicone resin is determined by gel permeation chromatography, wherein the following conditions are applied.

| | |
|---|---|
| Columns: | PSS SDV 50 x 8 mm pre-column; |
| | + PSS SDV 300 x 8 mm 100 A, 5 $\mu$m |
| | + PSS SDV 300 x 8 mm 1000 A, 5 $\mu$m |
| | + PSS SDV 300 x 8 mm 100,000 A, 5 $\mu$m, |
| | polystyrene-divinylbenzene |
| Mobile phase/solvent: | Toluene LiChrosolv, Merck KgaA, 1.08327 |
| Flow rate: | 1.0 ml/min |
| Injector: | Autosampler |
| Injection volume: | 100 $\mu$l |

(continued)

| | |
|---|---|
| Column/detector temperature: | 30 °C isotherm |
| Standards for calibration: | Polydimethoxysiloxane (PDMS) standards, PSS-pdmkit, lot pdmkit-09, dissolved in toluene |
| Sample preparation: | 50 mg of the sample were dissolved in 10 ml of toluene and an aliquot was added into a 1.5 ml HPLC vial. Subsequently, the sample was injected into the GPC system. |
| Method of Analysis: | Standard solutions were prepared by dissolving PDMS standards from 162 Da to 163,000 Da in toluene. |

All reported molecular weight parameters were calculated using PDMS standards.

Shore A hardness:

The Shore A hardness is measured according to the method described in ISO 7619-1:2010 using Shore A durometer model Sauter HBA 100-0 (Sauter Gmbh, Balingen, Germany). A test sample is prepared by casting the silicone preparation into a mould and allowing it to cure for 24 hours such that a sample having a thickness of 6 mm is obtained. The measurement is carried out under controlled conditions of 23 $\pm$ 1 °C und 50 $\pm$ 5% relative humidity in accordance with EN ISO 291:2008 after the test sample has been stored under these conditions for at least one hour.

Hydrolysis resistance:

After a material has been manufactured, it is stored under controlled conditions of 23 $\pm$ 1 °C und 50 $\pm$ 5% relative humidity in accordance with EN ISO 291:2008 for one week. Then, two samples are cut from the material to be tested. One of the samples is stored over a period of six weeks under controlled conditions of 23 $\pm$ 1 °C und 50 $\pm$ 5% relative humidity in accordance with DIN ISO 291. Thus, a "reference sample" is obtained.

The other sample of the material is subjected to an accelerated ageing test by storing the sample in a climate chamber at a temperature of 70 °C ($\pm$ 5°C) and a relative humidity of 95 % ($\pm$ 5 %) over a period of six weeks. Subsequently, the sample is conditioned by storing it for 24 hours under controlled conditions of 23 $\pm$ 1 °C und 50 $\pm$ 5% relative humidity in accordance with DIN ISO 291. Thus, an "aged sample" is obtained.

Hydrolysis resistance is evaluated by comparing the surface appearance (i.e. any occurrence of cracks) and the friction coefficient of the aged sample and the reference sample. Hydrolysis resistance is rated "+", if the surface of the aged sample is intact, i.e. no surface cracks are visible, and the difference between the friction coefficient of the aged sample and the reference sample does not exceed 10 %. If the cracks are visible in the surface of the aged sample and/or the difference between the friction coefficient of the aged sample and the reference sample is more than 10 %, hydrolysis resistance is rated "-".

Abrasion resistance:

After a material has been manufactured, it is stored under controlled conditions of 23 $\pm$ 1 °C und 50 $\pm$ 5% relative humidity in accordance with EN ISO 291:2008 for one week. Then, four samples are cut from the material to be tested. Two of these samples are subjected to accelerated ageing as described with respect to hydrolysis resistance in order to obtain two aged samples. The other two samples are measured without ageing

The abrasion resistance relates to the abrasion resistance according to Martindale and is measured as described in EN ISO 5470-2:2003, method 1, for a dry sample using a specified worsted fabric under controlled conditions of 23 $\pm$ 1 °C und 50 $\pm$ 5% relative humidity in accordance with EN ISO 291:2008. The worsted fabric is rubbed across the sample surface to be tested under a pressure of 12 kPa. The number of rubbing cycles is counted and the surface of the sample is inspected every 5000 cycles until a number of 30000 cycles is reached. Then the surface is inspected every 10000 cycles until a number of 50000 cycles is reached, every 25000 cycles until a number of 100000 cycles is reached. A fresh piece of worsted fabric is placed into the testing apparatus after 50,000 cycles have been completed. At each inspection, the sample surface is rated according to the scheme defined in EN ISO 5470-2:2003. The test is continued when the state of the sample surface is rated "2" or better. The test is stopped when a number of 100000 cycles is reached or when the state of the sample surface is rated inferior to "2" (such as "3"). The number of cycles is noted, i.e. a high number indicates relatively high abrasion resistance.

For each material to be tested, two samples are tested and the arithmetic mean of the number of cycles is calculated.

Bending resistance:

After a material has been manufactured, it is stored under controlled conditions of 23 $\pm$ 1 °C und 50 $\pm$ 5% relative humidity in accordance with EN ISO 291:2008 for one week. Then, 9 samples are cut from the material to be tested, which are conditioned by storing it for 24 hours under controlled conditions of 23 $\pm$ 1 °C und 50 $\pm$ 5% relative humidity in accordance with DIN ISO 291.

The bending resistance is measured for 3 samples in the machine direction and for 3 samples in transversal direction, i.e. 9 samples in total, as described in EN ISO 32100:2018. The number of bending cycles is counted and the surface of the samples is inspected every 5000 cycles until a number of 30000 cycles is reached. Then the surface is inspected every 10000 cycles until a number of 50000 cycles is reached, every 25000 cycles until a number of 100000 cycles is reached. At each inspection, the sample surface is rated according to the scheme defined in EN ISO 32100:2018. The test is continued when the state of the sample surface is rated "2" or better. The test is stopped when a number of 100000 cycles is reached or when the state of the sample surface is rated inferior to "2" (such as "3"). The number of cycles is noted, i.e. a high number indicates relatively high bending resistance.

For each material to be tested, the arithmetic mean of the number of cycles recorded for the 9 samples tested is calculated.

Lightfastness:

The lightfastness is measured as described in EN ISO 105-B02:2014, wherein assessment is carried out according to the blue scale standard, method 3, exposure cycle A1. The sample is obtained from a material that does not contain any colorizing agent. The measurement conditions are as follows.

| | |
|---|---|
| Irradiation: | 42.0 W/m$^2$ |
| Temperature of the sample environment: | 30 °C |
| Black standard temperature: | 48 °C |
| Relative humidity: | 40 % |

Lightfastness is rated on a scale ranging from 1 to 8 as defined in EN ISO 105-B02:2014, wherein a higher numerical value relates to a higher rating of lightfastness, i.e. 8 relates to the highest level of lightfastness.

A sample is obtained from a material that does not contain any colorizing agent after it has been stored under controlled conditions of 23 $\pm$ 1°C und 50 $\pm$ 5% relative humidity in accordance with EN ISO 291:2008 for one week after its manufacture.

Friction coefficient u:

The friction coefficient represents a parameter that correlates with the hand of the surface of a material. A material surface having a low friction coefficient is commonly perceived as giving a smooth and pleasant feel when it comes in contact with human skin, for instance because it is touched with fingers. The friction coefficient is therefore a parameter suitable for quantifying the hand of the tested surface of a material. A low friction coefficient measured for a specific surface of a material indicates good hand of this material surface.

The friction coefficient $\mu$ is measured according to the following procedure.

After a material has been manufactured, it is stored under controlled conditions of 23 $\pm$ 1 °C und 50 $\pm$ 5% relative humidity in accordance with EN ISO 291:2008 for one week. A total of three samples each having dimensions of 3 cm x 4 cm is cut from the material to be tested.

A plane glass sheet having dimensions of at least 10 cm x 10 cm (cut from ordinary window glass) is cleaned from any greasy and non-greasy surface contaminations such as fingerprints etc. using acetone and allowed to dry at room temperature. The cleaned surface of the glass sheet is levelled and fixed in exact horizontal orientation under controlled conditions of 23 $\pm$ 1°C und 50 $\pm$ 5% relative humidity in accordance with EN ISO 291:2008.

Each sample is placed on the glass sheet with the surface of which the friction coefficient is to be tested facing the surface of the glass sheet. A metal weight of 200 g having a cylindrical shape with a circular base area of 6.2 cm$^2$ (i.e. a diameter of about 2.8 cm) is placed on the sample. This metal weight exerts a normal force $F_N$ of 1.96 N. A spring scale is attached to the sample. The spring scale is drawn in a direction parallel to the surface of the glass sheet by gradually increasing the force applied until the sample is moved a small distance across the surface. The force applied is decreased until the sample comes to rest again. The value indicated on the spring scale in the moment in which the sample comes to rest is read.

For each sample, three measurements are carried out. Thus, nine readings are obtained for the material to be tested. It is immediately understood that the reading has to be converted to the unit of a force, i.e. Newton. For instance, if the reading is in the unit "gram" (because the spring scale is designed as a balance for measuring a mass m), the reading has to be converted to the static friction $F_R$ having the unit Newton using the equation $F_R = m \cdot 9.81$ m/s$^2$.

From the nine readings obtained, the arithmetic mean is calculated. The friction coefficient $\mu$ is calculated as the ratio of static friction $F_R$ and normal force $F_N$ according to the equation

$$\mu = F_R / F_N .$$

As indicated, a low value of the friction coefficient $\mu$ indicates good hand of the tested material surface, i.e. the lower the friction coefficient $\mu$, the better the hand of the material. A friction coefficient of more than 0.45 ($\mu > 0.45$) indicates unsatisfactory hand.

Viscosity:

All viscosity data indicated within the framework of the present invention were measured using a Brookfield Digital Rheometer Model DV-III, spindle #7, at 10 rpm. All measurements are conducted under controlled conditions of 23 $\pm$ 1°C und 50 $\pm$ 5% relative humidity in accordance with EN ISO 291:2008 and after the sample has been stored for one hour under these conditions.

Examples 1 to 7: Preparation of multilayer composites

Exemplary multilayer composites containing four layers (namely, in this order, backing material, adhesive, basecoat, topcoat) are prepared according to a transfer coating method using an embossed release paper (type DE-43 APZ, commercially available from Ajinomoto Trading Inc.). On a laboratory scale, the process is carried out in a discontinuous manner.

The following compounds were used in the preparation of exemplary composite materials.

(A-1)a:    Vinyl-functionalized polysiloxane (Hansa SFA 42102) Mw $\approx$ 28000 g/mol, viscosity 1000 mPa·s, vinyl functionalization $\approx$ 0.13 mmol/g

(A-1)b:    Vinyl-functionalized polysiloxane (Hansa SFA 42103) Mw $\approx$ 63000 g/mol, viscosity 10000 mPa·s, vinyl functionalization $\approx$ 0.05 mmol/g

(A-1)c:    Vinyl-functionalized polysiloxane (Hansa SFA 42100) Mw $\approx$ 6000 g/mol, viscosity 100 mPa·s, vinyl functionalization $\approx$ 0.37 mmol/g

(A-2)a:    H-functionalized polysiloxane (Hansa SFA 11340) Mw $\approx$ 24000 g/mol, viscosity 2000 mPa·s, H-functionalization $\approx$ 0.33 mmol/g

(A-2)b:    H-functionalized polysiloxane (Hansa SFA 11230) Mw $\approx$ 10000 g/mol, viscosity 200 mPa·s, H-functionalization $\approx$ 2.3 mmol/g

(A-2c):    H-functionalized polysiloxane (Hansa SFA 12010) Mw $\approx$ 1000 g/mol, viscosity 10 mPa·sm H-functionalization $\approx$ 1.4 mmol/g

(A-3):    pyrogenic silica (Aerosil 300V) specific surface (BET) $\approx$ 300 m$^2$/g, surface-modified with $(H_3C)_3Si$- groups and $(vinyl)(H_3C)_2Si$-groups, vinyl functionalization $\approx$ 0.06 mmol/g

(A-4):    Vinyl-functionalized polysiloxane (Hansa SFA 41391) Mw $\approx$ 50000 g/mol, viscosity 5000 mPa·s, vinyl functionalization $\approx$ 0.96 mmol/g

(A-5):    Karstedt catalyst (Pt(0) complex with 1,3-divinyl-1,1,3,3-tetramethyldisiloxane; $[O(Si(CH_3)_2CH=CH_2)_2]_3Pt_2$; molecular weight = 949.36 g/mol; Pt content = 41.10 wt.-%)

(B-1):    Silicone resin containing trimethoxysilyl groups and 3-methacryloylpropyl groups; Mw $\approx$ 3000 g/mol, content of methoxy groups attached to silicon $\approx$ 15 % wt.-%, (iSys RES 731)

(B-2)a:    Polypropylenoxide having terminal dimethoxymethylsilyl groups (Silyl™ SAX015, commercially available from Kaneka Belgium N.V.)

(B-2)b:    Aliphatic polyurethane having terminal trimethoxysilyl groups (Desmoseal® S XP 2749, commercially available from Covestro AG, Germany)

(B-4):    Mixture of tetra-isopropyl titanate and tetra-n-butyl titanate, content of TiO$_2$ about 27.1 % (Tyzor TPT-20B, commercially available from Dorf Ketal B.V., the Netherlands)

(C):    Quartz and kaolinite ("Neuburger Kieselerde"), CAS no. 1020665-14-8, surface-modified with a methacryl silane (Aktisil Q, Hoffmann Mineral GmbH)

Adhesive layer: Tubcosil HAB 5-1

All grades of Hansa SFA, Tubcosil and iSys RES 731 are commercially available from CHT Germany GmbH, Tubingen, Germany.

The procedure for forming multilayer composites comprises steps (1) to (3) as described in the following.

(1) Formation of topcoat layer:

A topcoat silicone preparation curing by an addition reaction and a condensation reaction is obtained by mixing the components indicated in table 1. A topcoat layer is formed by coating this silicone preparation onto the surface of an embossed release paper sheet and curing the coating. The thickness of this coating is 5-10 μm or 20 μm as indicated in table 1. The silicone preparation is applied by means of an air knife in order to obtain a coating thickness of 5-10 μm, wherein the range indicated for the thickness essentially results from the embossed surface structure of the release paper. Alternatively, the silicone preparation is applied by means of a knife-over-roll combination, wherein the gap width is set to 20 μm over the paper surface. Curing of the coating is effected by heating this combination of release paper and topcoat silicone preparation to 150 °C for 2 minutes in an oven. For these steps, a combination of dryer and laboratory coating table of type "Labcoater" (commercially available from Mathis AG, Switzerland) is used.

In the topcoat silicone preparation, three grades of α,ω-divinyl organopolysiloxanes (A-1) are used. 127 parts by weight of Hansa SFA 42102: Mw of about 28000 g/mol, 24 parts by weight of Hansa SFA 42103: Mw of about 63000 g/mol, and 60 parts by weight of Hansa SFA 42100: Mw of about 6000 g/mol, i.e. 211 parts by weight of α,ω-divinyl organopolysiloxanes (A-1) in total.

It can be calculated that the molecular weight Mw of the mixture of α,ω-divinyl organopolysiloxanes (A-1) thus present in the silicone preparation is about 25725 g/mol.

(2) Formation of basecoat layer:

An addition-curing silicone preparation having a viscosity of 80000 mPa·s and a pot life of more than 12 hours (measured at under controlled conditions of 23 ± 1 °C und 50 ± 5% relative humidity in accordance with EN ISO 291:2008) is obtained by mixing a composition comprising an alkenyl-functionalized siloxane and a platinum catalyst with a composition comprising an organohydrogenpolysiloxane. A basecoat layer having a thickness of 300 μm is formed by coating this addition-curing silicone preparation onto the layer of the cured topcoat of the aforementioned combination of release paper and topcoat layer and curing the coating. Curing of the coating is effected by heating this combination of release paper and topcoat silicone preparation to 150 °C for 2 minutes in an oven. For these steps, a combination of dryer and laboratory coating table of type "Labcoater" (commercially available from Mathis AG, Switzerland) is used.

This basecoat has a Shore A hardness of 30-60, a tensile strength (measured according to DIN 53504 S3 A after 14 days of storage at 23 °C and 50 % relative humidity) of 3 N/mm$^2$ or higher, an elongation at break (measured according to DIN 53504 S3 A after 14 days of storage at 23 °C and 50 % relative humidity) of 150 % or higher and a resistance to further tearing (measured according to ASTM D 624 form B after 14 days of storage at 23 °C and 50 % relative humidity) of 8 N/mm or higher.

(3) Formation of adhesive layer and application of backing material:

An addition-curing silicone preparation is obtained by mixing two compositions commercially available as a kit under the tradename "Tubcosil HAB 5-1" from CHT Germany GmbH, Germany. An adhesive coating layer having a thickness of 20 μm is formed by coating this silicone preparation onto the cured basecoat layer of the aforementioned combination of release paper, topcoat layer and basecoat layer. A polyester knitwear having an area density of 200 g/m$^2$ (Art. 30757 as commercially available from Mattes & Ammann GmbH & Co.KG, Germany) is used as the backing material and is placed on the adhesive coating layer. Curing of the coating is effected by heating this combination of release paper and topcoat silicone preparation to 150 °C for 2 minutes in an oven. For these steps, a combination of dryer and laboratory coating table of type "Labcoater" (commercially available from Mathis AG, Switzerland) is used. Subsequently, the release paper sheet is removed from the topcoat layer.

The properties of the multilayer composite thus prepared are determined according to the procedures described hereinabove. The results are shown in table 3.

Comparative examples 1 to 3: Preparation of multilayer composites

Comparative multilayer composites are prepared as summarized in table 2 according to the procedure described with respect to examples 1 to 7, which is modified such as to result in the following differences.

In the multilayer composite of comparative examples 1 and 2, the silicone preparation from which the topcoat layer is formed does not contain component (B-2). In comparative example 1, the silicone preparation for forming the topcoat layer is applied by means of an air knife in order to obtain a coating thickness of 5-10 μm, i.e. in the same manner as in examples 1, 2 and 4. In comparative example 2, the silicone preparation for forming the topcoat layer is applied by by means of a knife-over-roll combination, wherein the gap width is set to 20 μm over the paper surface, i.e. in the same manner as in examples 3 and 5-7.

In comparative example 3, a multilayer composite was formed comprising only three layers, i.e. a silicone preparation for forming a topcoat layer as described in examples 1-7 and comparative examples 1 and 2 was not applied. Thus, the uppermost layer of the multilayer composite was the basecoat layer.

The properties of the multilayer composites thus prepared are determined according to the procedures described hereinabove. The results are shown in table 3.

Table 1: Topcoat-forming silicone preparation (amounts of components in parts by weight)

| | Example | | | | | | |
|---|---|---|---|---|---|---|---|
| | 1 | 2 | 3 | 4 | 5 | 6 | 7 |
| (A-1)a | 127 | 127 | 127 | 127 | 127 | 127 | 127 |
| (A-1)b | 24 | 24 | 24 | 24 | 24 | 24 | 24 |
| (A-1)c | 60 | 60 | 60 | 60 | 60 | 60 | 60 |
| (A-2)a | 21 | 21 | 21 | 21 | 21 | 21 | 21 |
| (A-2)b | 42 | 42 | 42 | 42 | 42 | 42 | 42 |
| (A-2)c | 14 | 14 | 14 | 14 | 14 | 14 | 14 |
| (A-3) | 41 | 41 | 41 | 41 | 41 | 41 | 41 |
| (A-4) | 12 | 12 | 12 | 12 | 12 | 12 | 12 |
| Total (A-1) to (A-4) | 341 | 341 | 341 | 341 | 341 | 341 | 341 |
| (B-1) | 331 | 290 | 290 | 248 | 248 | 331 | 290 |
| (B-2)a | 42 | 83 | 83 | 125 | 125 | 0 | 0 |
| (B-2)b | 0 | 0 | 0 | 0 | 0 | 42 | 83 |
| Total (B-1) to (B-2) | 373 | 373 | 373 | 373 | 373 | 373 | 373 |
| (C) | 286 | 286 | 286 | 286 | 286 | 286 | 286 |
| Total (A)+(B)+(C) | 1000 | 1000 | 1000 | 1000 | 1000 | 1000 | 1000 |
| (A-5) | 0.096[1] | 0.096[1] | 0.096[1] | 0.096[1] | 0.096[1] | 0.096[1] | 0.096[1] |
| (B-4) | 8.5[2] | 8.5[2] | 8.5[2] | 8.5[2] | 8.5[2] | 8.5[2] | 8.5[2] |
| Topcoat layer [μm] | 5-10 | 5-10 | 20 | 5-10 | 20 | 20 | 20 |

[1] Amount of catalyst (A-5) is equivalent to 115 ppm of Pt relative to the total amount of components (A-1) to (A-4).
[2] Amount of catalyst (B-4) is equivalent to 2.3 % by weight relative to the total amount of components (B-1) to (B-3).

Table 2: Topcoat-forming silicone preparation (amounts of components in parts by weight)

| | Comparative example | | |
|---|---|---|---|
| | 1 | 2 | 3 |
| (A-1)a | 127 | 127 | -- |
| (A-1)b | 24 | 24 | -- |
| (A-1)c | 60 | 60 | -- |
| (A-2)a | 21 | 21 | -- |
| (A-2)b | 42 | 42 | -- |
| (A-2)c | 14 | 14 | -- |
| (A-3) | 41 | 41 | -- |
| (A-4) | 12 | 12 | -- |
| Total (A-1) to (A-4) | 341 | 341 | -- |
| (B-1) | 373 | 290 | -- |
| (B-2)a | 0 | 83 | -- |
| (B-2)b | 0 | 0 | -- |

(continued)

| | Comparative example | | |
|---|---|---|---|
| | 1 | 2 | 3 |
| Total (B-1) to (B-2) | 373 | 373 | -- |
| (C) | 286 | 286 | -- |
| Total (A)+(B)+(C) | 1000 | 1000 | -- |
| (A-5) | 0.096[1] | 0.096[1] | -- |
| (B-4) | 8.5[2] | 8.5[2] | -- |
| Topcoat layer [µm] | 5-10 | 20 | n.a. |

[1] Amount of catalyst (A-5) is equivalent to 115 ppm of Pt relative to the total amount of components (A-1) to (A-4).
[2] Amount of catalyst (B-4) is equivalent to 2.3 % by weight relative to the total amount of components (B-1) to (B-3).

Table 3: Properties of multilayer composites

| | Comparative | | | Example | | | | | | |
|---|---|---|---|---|---|---|---|---|---|---|
| | 1 | 2 | 3 | 1 | 2 | 3 | 4 | 5 | 6 | 7 |
| Hydrolysis resistance | + | + | n.d. | + | + | + | n.d. | n.d. | n.d. | n.d. |
| Abrasion resistance<br>- reference sample<br>- aged sample [cycles] | 25000<br>25000 | 50000<br>n.d. | n.d.<br>n.d. | 40000<br>n.d. | 50000<br>50000 | 100000<br>n.d. | 50000<br>n.d. | 100000<br>n.d. | 40000<br>n.d. | 50000<br>n.d. |
| Bending resistance<br>- reference sample<br>- aged sample [cycles] | 100000<br>100000 | 5000<br>n.d. | n.d.<br>n.d. | 100000 | 100000<br>100000 | 100000 | 100000 | 100000 | 100000 | 100000 |
| Lightfastness | 8 | 8 | n.d. | 8 | 8 | 8 | n.d. | n.d. | n.d. | n.d. |
| Friction coefficient $\mu$ | 0.23 | 0.21 | 0.74 | 0.34 | 0.39 | 0.35 | 0.45 | 0.38 | 0.30 | 0.33 |
| n.d. = not determined | | | | | | | | | | |

These examples and comparative examples show that the present invention provides a silicone preparation that is suitable to impart advantageous properties to a multilayer composite, in particular mechanical stability (such as abrasion resistance and bending resistance), light resistance, aging resistance and pleasant hand.

**Claims**

1. First kit comprising a composition (a) and a composition (b), wherein composition (a) and composition (b) are spatially separated from each other and composition (a) and composition (b) comprise

(A-1) 100-350 parts by weight of a linear organopolysiloxane having terminal alkenyl groups and a molecular weight Mw of 3000 g/mol or more, determined by gel permeation chromatography;
(A-2) 25-100 parts by weight of an organohydrogenpolysiloxane having 5-300 siloxane repeating units, of which 2-100 repeating unit have Si-H bonds;
(A-3) 0-150 parts by weight of hydrophobized silica that optionally has alkenyl groups on its surface;
(A-4) 0-40 parts by weight of a linear organopolysiloxane having at least two alkenyl groups per molecule and having a molecular weight Mw of 3000 g/mol or more, determined by gel permeation chromatography;
(A-5) 0.1-1000 ppm of a hydrosilylation catalyst comprising a transition metal, expressed in terms of the weight of the transition metal relative to the total weight of components (A-1) to (A-4);
(B-1) 200-450 parts by weight of a silicone resin containing at least one group $-SiR^9_bY_{3-b}$, wherein $R^9$ is a hydrocarbon group having 1-20 carbon atoms, that is optionally substituted with an acryloyl group, a methacryloyl group, or a combination of these; Y is a hydroxyl group or a hydrolysable group selected from halogen and an alkoxy group having 1-3 carbon atoms, b is 0, 1 or 2;
(B-2) 25-125 parts by weight of an organic polymer having at least two groups $-SiR^6_aX_{3-a}$ attached to its polymer backbone, wherein $R^6$ is a hydrocarbon group having 1-20 carbon atoms, X is a hydroxyl group or a hydrolysable group selected from halogen and an alkoxy group having 1-3 carbon atoms, a is 0, 1 or 2, and the polymer backbone is selected from a polyether, polyurethane, polyacrylate poly(meth)acrylate, saturated polyolefin and polyester;
(B-3) 0-25 parts by weight of a silane component selected from $Si(O-R^7)_4$, $(R^8)Si(O-R^7)_3$ and a combination of these, wherein $R^7$ is a linear or branched alkyl group having 1-4 carbon atoms and $R^8$ is a linear or branched alkyl group having 1-4 carbon atoms, a linear or branched alkyl group having 1-4 carbon atoms which is substituted with $H_2C=CH-C(=O)-O-$ or a linear or branched alkyl group having 1-4 carbon atoms which is substituted with $H_2C=C(CH_3)-C(=O)-O-$; and
(B-4) 0.5-5 % by weight of a condensation reaction catalyst, relative to the total weight of components (B-1), (B-2) and (B-3);
(C) 150-400 parts by weight of a filler;
wherein the total amount of components (A-1) to (A-4), (B-1), (B-2) and (B-3) and (C) is 1000 parts by weight and the total weight of components (A-1) to (A-5), (B-1) to (B-4) and (C) is at least 75 % by weight, preferably at least 80 % by weight, more preferably at least 90 % by weight, most preferably at least 95 % by weight, of the total weight of compositions (a) and (b),
with the proviso that the following components are not present together in one of composition (a) and composition (b):

(A-2) and (A-5);
(B-4) and one or more of (B-1), (B-2), (B-3);

and wherein
component (A-1) preferably is a linear organopolysiloxane of formula (I)

$$R^2-(Si(R^1)_2)-(O-Si(R^1)_2)_p-(O-Si(R^1)_2)-R^2 \qquad (I)$$

,
wherein

each $R^1$ independently represents a linear or branched alkyl group having 1-4 carbon atoms,
each $R^2$ independently represent a linear alkenyl group having 2-6 carbon atoms, and
p represents a numerical value in the range of 30-2000;
component (A-2) preferably has a composition represented by formula (II)

$$R^3_q H_r SiO_{(4-q-r)/2} \qquad \text{(II)}$$

wherein

q and r each are numerical values fulfilling the conditions

$$0.7 \leq q \leq 2.1,$$

$$0.01 \leq r \leq 1.0,$$

$$0.8 \leq q + r \leq 3.0,$$

$R^3$ independently represents a linear or branched alkyl group having 1-4 carbon atoms;

component (A-3) is preferably a silica powder having on its surface hydrophobic groups selected from linear or branched alkyl groups having 1-4 carbon atoms, linear or branched alkenyl groups having 2-4 carbon atoms or any combination of these;
component (A-4) preferably consists of the following substructures

$$((R^2)(R^1)_2 SiO_{1/2})_w$$

$$((R^1)_3 SiO_{1/2})_{2-w}$$

$$((R^1)_2 SiO_{2/2})_u$$

$$((R^1)(R^2)SiO_{2/2})_v$$

wherein

each $R^1$ independently represents a linear or branched alkyl group having 1-4 carbon atoms,
each $R^2$ independently represent a linear alkenyl group having 2-6 carbon atoms, and
u represents a numerical value fulfilling the condition $30 \leq u \leq 1300$,
v represents a numerical value fulfilling the condition $(2-w) \leq v \leq 170$,
w represents 0, 1 or 2;

component (A-5) is preferably a compound comprising a transition metal selected from platinum, palladium and rhodium; more preferably Karstedt's catalyst;
component (B-1) preferably has a weight-average molecular weight Mw in the range of 300-10000 g/mol, determined by gel permeation chromatography; wherein component (B-1) more preferably comprises $(R^4)SiO_{3/2}$ units and, optionally, $(R^4)_3 SiO_{1/2}$ units, $(R^4)_2 SiO_{2/2}$ units, and $SiO_{4/2}$ units, wherein

each $R^4$ is independently selected from the group consisting of linear or branched alkyl groups having 1-4 carbon atoms, linear or branched alkoxy groups having 1-4 carbon atoms, $H_2C=CH-C(=O)-O-R^5-$ (an acryloxy alkylene group) or $H_2C=C(CH_3)-C(=O)-O-R^5-$ (a methacryloxy alkylene group), wherein $R^5$ represents a linear alkylene group having 1-6 carbon atoms;

component (B-2) is preferably an organic polymer having at least two groups $-SiR^6_a X_{3-a}$ attached to its polymer backbone, wherein $R^6$ is an alkyl group having 1-6 carbon atoms, wherein $R^6$ more preferably is an alkyl group selected from methyl, ethyl, propyl, isopropyl, 1-butyl, 2-butyl, 2-methyl-1-propyl and 2-methyl-2-propyl, and the polymer backbone is preferably selected from a polyether, polyurethane, polyacrylate, poly(meth)acrylate, saturated polyolefin and polyester,

26

each of which can be linear or branched;
component (B-3) is preferably selected from $Si(O-R^7)_4$, $(R^8)Si(O-R^7)_3$ and a combination of these, wherein

$R^7$ is a linear or branched alkyl group having 1-3 carbon atoms and
$R^8$ is a linear or branched alkyl group having 1-3 carbon atoms, a linear or branched alkyl group having 1-4 carbon atoms which is substituted with $H_2C=CH-C(=O)-O-$ or a linear or branched alkyl group having 1-4 carbon atoms which is substituted with $H_2C=C(CH_3)-C(=O)-O-$;

component (B-4) is preferably a compound comprising Ti, Zr, Al, Sn, or Zn, more preferably a compound represented by $Mt(O-A1)_4$, wherein Mt represents Ti or Zr and A1 is selected from methyl, ethyl, n-propyl, i-propyl, 1-butyl, 2-butyl, 2-methyl-1-propyl and 2-methyl-2-propyl;
component (C) is preferably selected from titanium oxide, iron oxide, cerium oxide, vanadium oxide, cobalt oxide, chromium oxide, manganese oxide, silicon dioxide, diatomaceous earth, calcium carbonate, magnesium carbonate, alumina, hollow glass beads, hollow resin beads, silicates, alumosilicates and any combination of these; component (C) more preferably is different from component (A-3) and still more preferably selected from silicon dioxide, kaolinite and any combination of these.

2. First silicone preparation obtainable by mixing composition (a) and composition (b) of the first kit defined in claim 1.

3. Method of curing the first silicone preparation defined in claim 2, wherein curing is effected by heating the first silicone preparation to a temperature in the range of 100-200 °C, more preferably 120-190 °C, wherein heating is preferably conducted over a period of 0.5-5 minutes, more preferably 1-3 minutes, even more preferably 1-2 minutes.

4. First cured material obtainable by curing the first silicone preparation defined in claim 2, wherein curing is preferably effected by means of the method defined in claim 3.

5. Second kit comprising a composition (c) and composition (d), wherein composition (c) and composition (d) are spatially separated from each other and composition (c) and composition (d) comprise

400-800 parts by weight of component (A-1) which is as defined in claim 1;
10-200 parts by weight of component (A-2) which is as defined in claim 1;
0-300 parts by weight of component (A-3) which is as defined in claim 1;
0-40 parts by weight of component (A-4) which is as defined in claim 1;
0.1-1000 ppm of component (A-5), which is as defined in claim 1, expressed in terms of the weight of the transition metal relative to the total weight of components (A-1) to (A-4);
0.5-50 parts by weight of component (B-3) which is as defined in claim 1;
0.5-5 % by weight of component (B-4), which is as defined in claim 1, relative to the total weight of component (B-3);
0-400 parts by weight of component (C) which is as defined under claim 1;
wherein the total amount of components (A-1) to (A-4), (B-1), (B-3) and (C) is 1000 parts by weight and the total weight of components (A-1) to (A-5), (B-3), (B-4) and (C) is at least 75 % by weight of the total weight of compositions (c) and (d),
with the proviso that the following components are not present together in one of composition (c) and composition (d):

(A-2) and (A-5);
(B-4) and (B-3).

6. Second silicone preparation obtainable by mixing composition (c) and composition (d) of the kit defined in claim 5.

7. Method of curing the second silicone preparation defined in claim 6, wherein curing is effected by heating the second silicone preparation to a temperature in the range of 100-200 °C, more preferably 120-190 °C, wherein heating is preferably conducted over a period of 0.5-5 minutes, more preferably 1-3 minutes, even more preferably 1-2 minutes.

**8.** Multilayer composite comprising

(i) a backing material;
(ii) optionally an adhesive layer obtainable by curing the second silicone preparation defined in claim 6;
(iii) a basecoat layer obtainable by curing the second silicone preparation defined in claim 6, wherein the second silicone preparation for forming the basecoat layer can have the same or different constitution as the second silicone preparation for forming the adhesive layer;
(iv) a topcoat layer obtainable by curing the first silicone preparation defined in claim 1; wherein the backing material, the optional adhesive layer, the basecoat layer and the topcoat layer are present in the order in which they are mentioned;
wherein the backing material preferably is a textile material, which comprises natural fibers, synthetic fibers or a combination of these, or leather;
wherein the natural fibers are preferably selected from the group consisting of cotton, wool, hemp, sisal, flax, jute and any combination of these;
wherein the synthetic fibers are polymer fibers, wherein the polymer is selected from the group consisting of rayon, polyurethane, polyester, polypropylene, polyethylene, polyamide, polyacrylnitrile, polycarbonate and any combination of these.

**9.** Multilayer composite as defined in claim 8, wherein the multilayer composite comprises an adhesive layer obtainable by curing the second silicone preparation defined in claim 6.

**10.** Multilayer composite as defined in claim 8 or claim 9, wherein the multilayer composite is part of a garment, footwear, glove, upholstery fabric, or trim material.

**11.** Method of preparing a multilayer composite as defined in claim 8 comprising the steps of

(i) coating a second silicone preparation defined in claim 6 onto a surface of a backing material,
(ii) curing the coating of the second silicone preparation in order to form a cured material as a basecoat layer,
(iii) coating a first silicone preparation defined in claim 2 onto the surface of the first cured material of the basecoat layer formed in step (ii),
(iv) curing the coating of the first silicone preparation in order to form a topcoat layer.

**12.** Method of preparing a multilayer composite as defined in claim 9 comprising the steps of

(i) coating a second silicone preparation defined in claim 6 onto a surface of a backing material,
(ii) curing the coating of the second silicone preparation in order to form a second cured material as an adhesive layer,
(iii) coating a second silicone preparation defined in claim 6 onto the surface of the second cured material of the adhesive layer formed in step (ii),
(iv) curing the coating of the second silicone preparation in order to form a second cured material as a basecoat layer,
(v) coating a first silicone preparation defined in claim 2 onto the surface of the second cured material of the basecoat layer formed in step (iv),
(vi) curing the coating of the first silicone preparation in order to form a first cured material as a topcoat layer;

wherein the second silicone preparation coated in step (i) has the same or different constitution as the second silicone preparation coated in step (iii).

**13.** Method of preparing a multilayer composite as defined in claim 9 comprising the steps of

(i) coating a first silicone preparation defined in claim 2 onto the surface of a release material,
(ii) curing the coating of the first silicone preparation in order to form a first cured material as a topcoat layer,
(iii) coating a second silicone preparation defined in claim 6 onto the surface of the first cured material of the topcoat layer formed in step (ii),
(iv) curing the coating of the second silicone preparation in order to form a second cured material as a basecoat layer,
(v) coating a second silicone preparation defined in claim 6 onto the surface of the second cured material of the basecoat layer formed in step (iv),

(vi) placing a backing material onto the second silicone preparation coating formed in step (v),

(vii) curing the coating of the second silicone preparation in order to form a second cured material as an adhesive layer,

(viii) removing the release material from the surface of the first cured material of the topcoat layer formed in step (ii);

wherein the second silicone preparation coated in step (i) has the same or different constitution as the second silicone preparation coated in step (iii).

14. Method of preparing a multilayer composite as defined in claim 9 comprising the steps of

(i) coating a first silicone preparation defined in claim 2 onto the surface of a release material,

(ii) curing the coating of the first silicone preparation in order to form a first cured material as a topcoat layer,

(iii) coating a second silicone preparation defined in claim 6 onto the surface of the first cured material of the topcoat layer formed in step (ii),

(iv) placing a backing material onto the second silicone preparation coating formed in step (iii),

(v) curing the coating of the second silicone preparation in order to form a second cured material as a basecoat layer,

(vi) removing the release material from the surface of the first cured material of the topcoat layer formed in step (ii).


**Patentansprüche**

1. Erster Kit umfassend eine Zusammensetzung (a) und eine Zusammensetzung (b), wobei Zusammensetzung (a) und Zusammensetzung (b) räumlich voneinander getrennt sind und Zusammensetzung (a) und Zusammensetzung (b) umfassen

(A-1) 100-350 Gewichtsteile eines linearen Organopolysiloxans mit terminalen Alkenylgruppen und einem Molekulargewicht Mw von 3000 g/mol oder mehr, bestimmt durch Gelpermeationschromatographie;

(A-2) 25-100 Gewichtsteile eines Organohydrogenpolysiloxans mit 5-300 Siloxan-Wiederholungseinheiten, von denen 2-100 Wiederholungseinheiten Si-H-Bindungen aufweisen;

(A-3) 0-150 Gewichtsteile hydrophobiertes Siliziumdioxid, das gegebenenfalls Alkenylgruppen auf seiner Oberfläche aufweist;

(A-4) 0-40 Gewichtsteile eines linearen Organopolysiloxans mit mindestens zwei Alkenylgruppen pro Molekül und mit einem Molekulargewicht Mw von 3000 g/mol oder mehr, bestimmt durch Gelpermeationschromatographie;

(A-5) 0,1-1000 ppm eines Hydrosilylierungskatalysators, der ein Übergangsmetall umfasst, ausgedrückt als das Gewicht des Übergangsmetalls relativ zum Gesamtgewicht der Komponenten (A-1) bis (A-4);

(B-1) 200-450 Gew.-Teile eines Silikonharzes, das mindestens eine Gruppe $-SiR^9_bY_{3-b}$ enthält, worin $R^9$ eine Kohlenwasserstoffgruppe mit 1-20 Kohlenstoffatomen ist, die gegebenenfalls mit einer Acryloylgruppe, einer Methacryloylgruppe oder einer Kombination davon substituiert ist; Y eine Hydroxylgruppe oder eine hydrolysierbare Gruppe, ausgewählt aus Halogen und einer Alkoxygruppe mit 1-3 Kohlenstoffatomen, ist, b ist 0, 1 oder 2;

(B-2) 25-125 Gewichtsteile eines organischen Polymers mit mindestens zwei Gruppen $-SiR^6_aX_{3-a}$, die an dessen Polymerrückgrat gebunden sind, wobei $R^6$ eine Kohlenwasserstoffgruppe mit 1-20 Kohlenstoffatomen ist, X eine Hydroxylgruppe oder eine hydrolysierbare Gruppe, ausgewählt aus Halogen und einer Alkoxygruppe mit 1-3 Kohlenstoffatomen, ist a ist 0, 1 oder 2, und das Polymergrundgerüst ausgewählt ist aus einem Polyether, Polyurethan, Polyacrylat, gesättigtem Polyolefin und Polyester;

(B-3) 0-25 Gewichtsteile einer Silankomponente, ausgewählt aus $Si(O-R^7)_4$, $(R^8)Si(O-R^7)_3$ und einer Kombination davon, wobei $R^7$ eine lineare oder verzweigte Alkylgruppe mit 1-4 Kohlenstoffatomen ist und $R^8$ eine lineare oder verzweigte Alkylgruppe mit 1-4 Kohlenstoffatomen, eine lineare oder verzweigte Alkylgruppe mit 1-4 Kohlenstoffatomen, die mit $H_2C=CH-C(=O)-O-$ substituiert ist, oder eine lineare oder verzweigte Alkylgruppe mit 1-4 Kohlenstoffatomen, die mit $H_2C=C(CH_3)-C(=O)-O-$ substituiert ist, ist; und

(B-4) 0,5-5 Gew.-% eines Kondensationsreaktionskatalysators, bezogen auf das Gesamtgewicht der Komponenten (B-1), (B-2) und (B-3);

(C) 150-400 Gewichtsteile eines Füllstoffs;

wobei die Gesamtmenge der Komponenten (A-1) bis (A-4), (B-1), (B-2) und (B-3) und (C) 1000 Gewichtsteile beträgt und das Gesamtgewicht der Komponenten (A-1) bis (A-5), (B-1) bis (B-4) und (C) mindestens 75 Gew.-%, vorzugsweise mindestens 80 Gew.-%, weiter bevorzugt mindestens 90 Gew.-%, am meisten bevorzugt mindestens 95 Gew.-% des Gesamtgewichts der Zusammensetzungen (a) und (b) beträgt,

mit der Maßgabe, dass die folgenden Komponenten nicht zusammen in einer der Zusammensetzungen (a) und (b) vorliegen:

(A-2) und (A-5);
(B-4) und einer oder mehreren von (B-1), (B-2), (B-3);

und wobei
die Komponente (A-1) vorzugsweise ein lineares Organopolysiloxan der Formel (I)

$$R^2\text{-}(Si(R^1)_2)\text{-}(O\text{-}Si(R^1)_2)_p\text{-}(O\text{-}Si(R^1)2)\text{-}R^2 \qquad (I)$$

, ist,
wobei

jedes $R^1$ unabhängig eine lineare oder verzweigte Alkylgruppe mit 1-4 Kohlenstoffatomen darstellt,
jedes $R^2$ unabhängig eine lineare Alkenylgruppe mit 2-6 Kohlenstoffatomen darstellt, und
p einen numerischen Wert im Bereich von 30-2000 darstellt;
die Komponente (A-2) vorzugsweise eine durch die Formel (II)

$$R^3_q H_r SiO_{(4-q-r)/2} \qquad (II)$$

dargestellte Zusammensetzung aufweist,
wobei

q und r jeweils numerische Werte sind, die die Bedingungen

$$0{,}01 \le r \le 1{,}0,$$

$$0{,}01 \le r \le 1{,}0,$$

$$0{,}8 \le q + r \le 3{,}0$$

erfüllen,

$R^3$ unabhängig eine lineare oder verzweigte Alkylgruppe mit 1-4 Kohlenstoffatomen darstellt;

die Komponente (A-3) vorzugsweise ein Silicapulver ist, das auf seiner Oberfläche hydrophobe Gruppen aufweist, die aus linearen oder verzweigten Alkylgruppen mit 1-4 Kohlenstoffatomen, linearen oder verzweigten Alkenylgruppen mit 2-4 Kohlenstoffatomen oder einer beliebigen Kombination davon ausgewählt sind;
die Komponente (A-4) vorzugsweise aus den folgenden Unterstrukturen besteht

$$((R^2)(R^1)_2 SiO_{1/2})_w$$

$$((R^1)_3 SiO_{1/2})_{2-w}$$

$$((R^1)_2 SiO_{2/2})_u$$

$$((R^1)(R^2) SiO_{2/2})_v$$

wobei

jedes $R^1$ unabhängig eine lineare oder verzweigte Alkylgruppe mit 1-4 Kohlenstoffatomen darstellt,

jedes $R^2$ unabhängig eine lineare Alkenylgruppe mit 2-6 Kohlenstoffatomen darstellt, und

u einen Zahlenwert darstellt, der die Bedingung $30 \leq u \leq 1300$ erfüllt,

v einen Zahlenwert darstellt, der die Bedingung $(2-w) \leq v \leq 170$ erfüllt,

w 0, 1 oder 2 darstellt;

die Komponente (A-5) vorzugsweise eine Verbindung ist, die ein Übergangsmetall umfasst, das aus Platin, Palladium und Rhodium ausgewählt ist; weiter bevorzugt Karstedts Katalysator;

die Komponente (B-1) vorzugsweise ein gewichtsmittleres Molekulargewicht Mw im Bereich von 300-10000 g/mol aufweist, bestimmt durch Gelpermeationschromatographie; wobei die Komponente (B-1) weiter bevorzugt $(R^4)SiO_{3/2}$-Einheiten und gegebenenfalls $(R^4)_3SiO_{1/2}$-Einheiten, $(R^4)_2SiO_{2/2}$-Einheiten und $SiO_{4/2}$-Einheiten umfasst, wobei jedes $R^4$ unabhängig ausgewählt ist aus der Gruppe bestehend aus linearen oder verzweigten Alkylgruppen mit 1-4 Kohlenstoffatomen, linearen oder verzweigten Alkoxygruppen mit 1-4 Kohlenstoffatomen, $H_2C=CH-C(=O)-O-R^5$ (eine Acryloxyalkylengruppe) oder $H_2C=C(CH_3)-C(=O)-O-R^5$ (eine Methacryloxyalkylengruppe), wobei $R^5$ eine lineare Alkylengruppe mit 1-6 Kohlenstoffatomen darstellt;

die Komponente (B-2) vorzugsweise ein organisches Polymer ist, das mindestens zwei an sein Polymerrückgrat gebundene Gruppen $-SiR^6_aX_{3-a}$ aufweist, wobei $R^6$ eine Alkylgruppe mit 1-6 Kohlenstoffatomen ist, wobei $R^6$ weiter bevorzugt eine Alkylgruppe ist, die aus Methyl, Ethyl, Propyl, Isopropyl, 1-Butyl, 2-Butyl, 2-Methyl-1-propyl und 2-Methyl-2-propyl ausgewählt ist, und das Polymerrückgrat vorzugsweise aus einem Polyether, Polyurethan, Polyacrylat, Poly(meth)acrylat, gesättigtem Polyolefin und Polyester ausgewählt ist, von denen jedes linear oder verzweigt sein kann;

die Komponente (B-3) vorzugsweise ausgewählt ist aus $Si(O-R^7)_4$, $(R^8)Si(O-R^7)_3$ und einer Kombination davon, wobei

$R^7$ eine lineare oder verzweigte Alkylgruppe mit 1-3 Kohlenstoffatomen ist und $R^8$ eine lineare oder verzweigte Alkylgruppe mit 1-3 Kohlenstoffatomen, eine lineare oder verzweigte Alkylgruppe mit 1-4 Kohlenstoffatomen, die mit $H_2C=CH-C(=O)-O-$ substituiert ist, oder eine lineare oder verzweigte Alkylgruppe mit 1-4 Kohlenstoffatomen, die mit $H_2C=C(CH_3)-C(=O)-O-$substituiert ist, ist;

die Komponente (B-4) vorzugsweise eine Verbindung ist, die Ti, Zr, Al, Sn oder Zn umfasst, weiter bevorzugt eine Verbindung, die durch $Mt(O-A1)_4$ dargestellt ist, wobei Mt Ti oder Zr darstellt und A1 aus Methyl, Ethyl, n-Propyl, i-Propyl, 1-Butyl, 2-Butyl, 2-Methyl-1-propyl und 2-Methyl-2-propyl ausgewählt ist;

die Komponente (C) ist vorzugsweise ausgewählt ist aus Titanoxid,

Eisenoxid, Ceroxid, Vanadiumoxid, Kobaltoxid, Chromoxid, Manganoxid, Siliziumdioxid, Kieselgur, Calciumcarbonat, Magnesiumcarbonat, Aluminiumoxid, hohlen Glaskugeln, hohlen Harzkugeln, Silikaten, Alumosilikaten und jeder Kombination davon; die Komponente (C) weiter bevorzugt von Komponente (A-3) verschieden ist und noch weiter bevorzugt aus Siliziumdioxid, Kaolinit und jeder Kombination davon ausgewählt ist.

2. Erste Silikonzubereitung, erhältlich durch Mischen von Zusammensetzung (a) und Zusammensetzung (b) des ersten Kits wie im Anspruch 1 definiert.

3. Verfahren zum Härten der ersten Silikonzubereitung wie im Anspruch 2 definiert, wobei das Härten durch Erhitzen der ersten Silikonzubereitung auf eine Temperatur im Bereich von 100-200 °C, weiter bevorzugt 120-190 °C, bewirkt wird, wobei das Erhitzen vorzugsweise über einen Zeitraum von 0,5-5 Minuten, bevorzugter 1-3 Minuten, noch bevorzugter 1-2 Minuten durchgeführt wird.

4. Erstes gehärtetes Material, erhältlich durch Härten der ersten Silikonzubereitung wie im Anspruch 2 definiert, wobei das Härten vorzugsweise mittels des Verfahrens nach Anspruch 3 durchgeführt wird.

**5.** Zweiter Kit, umfassend eine Zusammensetzung (c) und Zusammensetzung (d), wobei Zusammensetzung (c) und Zusammensetzung (d) räumlich voneinander getrennt sind und Zusammensetzung (c) und Zusammensetzung (d) umfassen

400-800 Gewichtsteile der Komponente (A-1), die wie in Anspruch 1 definiert ist;
10-200 Gewichtsteile der Komponente (A-2), die wie in Anspruch 1 definiert ist;
0-300 Gewichtsteile der Komponente (A-3), die wie in Anspruch 1 definiert ist;
0-40 Gewichtsteile der Komponente (A-4), die wie in Anspruch 1 definiert ist;
0,1-1000 ppm der Komponente (A-5), die wie in Anspruch 1 definiert ist, ausgedrückt in Bezug auf das Gewicht des Übergangsmetalls und bezogen auf das Gesamtgewicht der Komponenten (A-1) bis (A-4);
0,5-50 Gewichtsteile der Komponente (B-3), die wie in Anspruch 1 definiert ist;
0,5-5 Gew.-% der Komponente (B-4), die wie in Anspruch 1 definiert ist, bezogen auf das Gesamtgewicht der Komponente (B-3);
0-400 Gewichtsteile der Komponente (C), die wie unter Anspruch 1 definiert ist;
wobei die Gesamtmenge der Komponenten (A-1) bis (A-4), (B-1), (B-3) und (C) 1000 Gewichtsteile beträgt und das Gesamtgewicht der Komponenten (A-1) bis (A-5), (B-3), (B-4) und (C) mindestens 75 Gew.-% des Gesamtgewichts der Zusammensetzungen (c) und (d) beträgt,
mit der Maßgabe, dass die folgenden Komponenten nicht zusammen in einer der Zusammensetzungen (c) und (d) vorliegen:

(A-2) und (A-5);
(B-4) und (B-3).

**6.** Zweite Silikonzubereitung, erhältlich durch Mischen von Zusammensetzung (c) und Zusammensetzung (d) des in Anspruch 5 definierten Kits.

**7.** Verfahren zum Härten der zweiten Silikonzubereitung wie im Anspruch 6 definiert, wobei das Härten durch Erhitzen der zweiten Silikonzubereitung auf eine Temperatur im Bereich von 100-200 °C, bevorzugter 120-190 °C, bewirkt wird, wobei das Erhitzen vorzugsweise über einen Zeitraum von 0,5-5 Minuten, weiter bevorzugt 1-3 Minuten, noch weiter bevorzugt 1-2 Minuten durchgeführt wird.

**8.** Mehrschichtiger Verbundstoff umfassend

(i) ein Trägermaterial;
(ii) optional eine Klebeschicht, die durch Aushärten der zweiten Silikonzubereitung wie im Anspruch 6 definiert erhältlich ist;
(iii) eine Grundschicht, die durch Härten der zweiten Silikonzubereitung wie im Anspruch 6 definiert erhältlich ist, wobei die zweite Silikonzubereitung zum Bilden der Grundschicht den gleichen oder einen anderen Aufbau haben kann wie die zweite Silikonzubereitung zum Bilden der Haftschicht;
(iv) eine Deckschicht, die durch Härten der ersten Silikonzubereitung wie im Anspruch 1 definiert erhältlich ist;
wobei das Trägermaterial, die optionale Klebeschicht, die Grundschicht und die Deckschicht in der Reihenfolge vorhanden sind, in der sie genannt sind;
wobei das Trägermaterial vorzugsweise ein textiles Material, das Naturfasern, synthetische Fasern oder eine Kombination von diesen umfasst, oder Leder ist; wobei die Naturfasern vorzugsweise aus der Gruppe ausgewählt sind, die aus Baumwolle, Wolle, Hanf, Sisal, Flachs, Jute und einer beliebigen Kombination von diesen besteht;
wobei die synthetischen Fasern Polymerfasern sind, wobei das Polymer ausgewählt ist aus der Gruppe bestehend aus Rayon, Polyurethan, Polyester, Polypropylen, Polyethylen, Polyamid, Polyacrylnitril, Polycarbonat und jeder Kombination von diesen.

**9.** Mehrschichtiger Verbundstoff gemäß Anspruch 8, wobei der mehrschichtige Verbundstoff eine Klebeschicht umfasst, die durch Härten der zweiten Silikonzubereitung wie im Anspruch 6 definiert erhältlich ist.

**10.** Mehrschichtiger Verbundstoff gemäß Anspruch 8 oder 9, wobei der mehrschichtige Verbundstoff Teil eines Kleidungsstücks, Schuhwerks, Handschuhs, Polsterstoffs oder Verkleidungsmaterials ist.

**11.** Verfahren zur Herstellung eines mehrschichtigen Verbundstoffes wie im Anspruch 8 definiert, umfassend die Schritte

(i) Auftragen einer zweiten Silikonzubereitung wie im Anspruch 6 definiert auf eine Oberfläche eines Trägermaterials,

(ii) Härten der Beschichtung der zweiten Silikonzubereitung, um ein gehärtetes Material als Grundschicht zu bilden,

(iii) Auftragen einer ersten Silikonzubereitung wie im Anspruch 2 definiert auf die Oberfläche des ersten gehärteten Materials der in Schritt (ii) gebildeten Grundschicht,

(iv) Härten der Beschichtung der ersten Silikonzubereitung, um eine Deckschicht zu bilden.

12. Verfahren zur Herstellung eines mehrschichtigen Verbundstoffes wie im Anspruch 9 definiert, umfassend die Schritte

(i) Auftragen einer zweiten Silikonzubereitung wie im Anspruch 6 definiert auf eine Oberfläche eines Trägermaterials,

(ii) Härten der Beschichtung der zweiten Silikonzubereitung, um ein zweites gehärtetes Material als Klebeschicht zu bilden,

(iii) Auftragen einer zweiten Silikonzubereitung wie im Anspruch 6 definiert auf die Oberfläche des zweiten gehärteten Materials der in Schritt (ii) gebildeten Klebeschicht,

(iv) Härten der Beschichtung der zweiten Silikonzubereitung, um ein zweites gehärtetes Material als Grundschicht zu bilden,

(v) Auftragen einer ersten Silikonzubereitung wie im Anspruch 2 definiert auf die Oberfläche des zweiten gehärteten Materials der in Schritt (iv) gebildeten Grundschicht,

(vi) Härten der Beschichtung der ersten Silikonzubereitung, um ein erstes gehärtetes Material als Deckschicht zu bilden;

wobei die zweite Silikonzubereitung, die in Schritt (i) aufgetragen wurde, den gleichen oder einen anderen Aufbau aufweist wie die zweite Silikonzubereitung, die in Schritt (iii) beschichtet wurde.

13. Verfahren zur Herstellung eines mehrschichtigen Verbundstoffes wie im Anspruch 9 definiert, umfassend die Schritte

(i) Auftragen einer ersten Silikonzubereitung wie im Anspruch 2 definiert auf die Oberfläche eines Trennmaterials,

(ii) Härten der Beschichtung der ersten Silikonzubereitung, um ein erstes gehärtetes Material als Deckschicht zu bilden,

(iii) Auftragen einer zweiten Silikonzubereitung wie im Anspruch 6 definiert auf die Oberfläche des ersten gehärteten Materials der in Schritt (ii) gebildeten Deckschicht,

(iv) Härten der Beschichtung der zweiten Silikonzubereitung, um ein zweites gehärtetes Material als Grundschicht zu bilden,

(v) Auftragen einer zweiten Silikonzubereitung wie im Anspruch 6 definiert auf die Oberfläche des zweiten gehärteten Materials der in Schritt (iv) gebildeten Grundschicht,

(vi) Aufbringen eines Trägermaterials auf die in Schritt (v) gebildete zweite Schicht der zweiten Silikonzubereitung,

(vii) Härten der Beschichtung der zweiten Silikonzubereitung, um ein zweites gehärtetes Material als Klebeschicht zu bilden,

(viii) Entfernen des Trennmaterials von der Oberfläche des ersten gehärteten Materials der in Schritt (ii) gebildeten Deckschicht;

wobei die zweite Silikonzubereitung, die in Schritt (i) aufgetragen wurde, die gleiche oder eine andere Beschaffenheit aufweist wie die zweite Silikonzubereitung, die in Schritt (iii) aufgetragen wurde.

14. Verfahren zur Herstellung eines mehrschichtigen Verbundstoffes wie im Anspruch 9 definiert, umfassend die Schritte

(i) Auftragen einer ersten Silikonzubereitung wie im Anspruch 2 definiert auf die Oberfläche eines Trennmaterials,

(ii) Härten der Beschichtung der ersten Silikonzubereitung, um ein erstes gehärtetes Material als Deckschicht zu bilden,

(iii) Auftragen einer zweiten Silikonzubereitung wie im Anspruch 6 definiert auf die Oberfläche des ersten gehärteten Materials der in Schritt (ii) gebildeten Deckschicht,

(iv) Aufbringen eines Trägermaterials auf die in Schritt (iii) gebildete Schicht der zweiten Silikonzubereitung,

(v) Härten der Beschichtung der zweiten Silikonzubereitung, um ein zweites gehärtetes Material als Grundschicht zu bilden,

(vi) Entfernen des Trennmaterials von der Oberfläche des ersten gehärteten Materials der in Schritt (ii) gebildeten Deckschicht.

**Revendications**

**1.** Premier kit comprenant une composition (a) et une composition (b), dans lequel la composition (a) et la composition (b) sont spatialement séparées l'une de l'autre et la composition (a) et la composition (b) comprennent

(A-1) de 100 à 350 parties en poids d'un organopolysiloxane linéaire ayant des groupes alcényle terminaux et un poids moléculaire Mw de 3000 g/mol ou plus, déterminé par chromatographie par perméation de gel ;
(A-2) de 25 à 100 parties en poids d'un organohydrogénopolysiloxane ayant de 5 à 300 motifs répétitifs siloxane, dont 2 à 100 motifs répétitifs ont des liaisons Si-H ;
(A-3) de 0 à 150 parties en poids de silice hydrophobisée qui a optionnellement des groupes alcényle sur sa surface ;
(A-4) de 0 à 40 parties en poids d'un organopolysiloxane linéaire ayant au moins deux groupes alcényle par molécule et ayant un poids moléculaire Mw de 3000 g/mol ou plus, déterminé par chromatographie par perméation de gel ;
(A-5) de 0,1 à 1000 ppm d'un catalyseur d'hydrosilylation comprenant un métal de transition, exprimé en termes de poids du métal de transition par rapport au poids total des composants (A-1) à (A-4) ;
(B-1) de 200 à 450 parties en poids d'une résine de silicone contenant au moins un groupe $-SIR^9_bY_{3-b}$, $R^9$ est un groupe hydrocarboné ayant de 1 à 20 atomes de carbone, qui est optionnellement substitué par un groupe acryloyle, un groupe méthacryloyle, ou une combinaison de ceux-ci ; Y est un groupe hydroxyle ou un groupe hydrolysable choisi parmi un halogène et un groupe alcoxy ayant de 1 à 3 atomes de carbone, b est égal à 0, 1 ou 2 ;
(B-2) de 25 à 125 parties en poids d'un polymère organique ayant au moins deux groupes $-SiIR^6_aX_{3-a}$ fixé à son squelette polymère, dans lequel $R^6$ est un groupe hydrocarboné ayant de 1 à 20 atomes de carbone, X est un groupe hydroxyle ou un groupe hydrolysable choisi parmi un halogène et un groupe alcoxy ayant de 1 à 3 atomes de carbone, a est égal à 0, 1 ou 2, et le squelette polymère est choisi parmi un polyéther, un polyuréthane, un poly(méth)acrylate polyacrylate, une polyoléfine saturée et un polyester ;
(B-3) de 0 à 25 parties en poids d'un composant silane choisi parmi $Si(O-R^7)_4$, $(R^8)Si(O-R^7)_3$ et une combinaison de ceux-ci, dans lequel $R^7$ est un groupe alkyle linéaire ou ramifié ayant de 1 à 4 atomes de carbone et $R^8$ est un groupe alkyle linéaire ou ramifié ayant de 1 à 4 atomes de carbone, un groupe alkyle linéaire ou ramifié ayant de 1 à 4 atomes de carbone qui est substitué par $H_2C=CH-C(=O)-O-$ ou un groupe alkyle linéaire ou ramifié ayant de 1 à 4 atomes de carbone qui est substitué par $H_2C=C(CH_3)-C(=O)-O-$ ; et
(B-4) de 0,5 à 5% en poids d'un catalyseur de réaction de condensation, par rapport au poids total des composants (B-1), (B-2) et (B-3) ;
(C) de 150 à 400 parties en poids d'une charge ;

la quantité totale des composants (A-1) à (A-4), (B-1), (B-2) et (B-3) et (C) étant de 1000 parties en poids et le poids total des composants (A-1) à (A-5), (B-1) à (B-4) et (C) représente au moins 75% en poids, de préférence au moins 80% en poids, de façon encore préférée au moins 90% en poids, de manière la plus préférée au moins 95% en poids, du poids total des compositions (a) et (b),
à condition que les composants suivants ne soient pas présents ensemble dans l'une des compositions (a) et (b) :

(A-2) et (A-5) ;
(B-4) et un ou plusieurs parmi (B-1), (B-2), (B-3) ;

et

le composant (A-1) est de préférence un organopolysiloxane linéaire de formule (I)

$$R^2-(Si(R^1)_2)-(O-Si(R^1)_2)_p-(O-Si(R^1)_2)-R^2 \qquad (I)$$

,

chaque $R^1$ représentant indépendamment un groupe alkyle linéaire ou ramifié ayant de 1 à 4 atomes de carbone,
chaque $R^2$ représentant indépendamment un groupe alcényle linéaire ayant de 2 à 6 atomes de carbone, et

p représente une valeur numérique située dans la gamme allant de 30 à 2000 ;
le composant (A-2) a de préférence une composition représentée par la formule (II)

$$R^3_q H_r SiO_{(4-q-r)/2} \qquad (II)$$

q et r étant chacun des valeurs numériques remplissant les conditions

$$0{,}7 \leq q \leq 2{,}1,$$

$$0{,}01 \leq r \leq 1{,}0,$$

$$0{,}8 \leq q + r \leq 3{,}0,$$

$R^3$ représente indépendamment un groupe alkyle linéaire ou ramifié ayant de 1 à 4 atomes de carbone ;
le composant (A-3) est de préférence une poudre de silice ayant sur sa surface des groupes hydrophobes choisis parmi des groupes alkyle linéaires ou ramifiés ayant de 1 à 4 atomes de carbone, des groupes alcényle linéaires ou ramifiés ayant de 2 à 4 atomes de carbone ou toute combinaison de ceux-ci ;
le composant (A-4) est de préférence constitué des sous-structures suivantes

$$((R^2)(R^1)_2 SiO_{1/2})_w$$

$$((R^1)_3 SiO_{1/2})_{2-w}$$

$$((R^1)_2 SiO_{2/2})_u$$

$$((R^1)(R^2)SiO_{2/2})_v$$

chaque $R^1$ représente indépendamment un groupe alkyle linéaire ou ramifié ayant de 1 à 4 atomes de carbone,
chaque $R^2$ représente indépendamment un groupe alcényle linéaire ayant de 2 à 6 atomes de carbone, et
u représente une valeur numérique remplissant la condition $30 \leq u \leq 1300$,
v représente une valeur numérique remplissant la condition $(2-w) \leq v \leq 170$,
w représente 0, 1 ou 2 ;
le composant (A-5) est de préférence un composé comprenant un métal de transition choisi parmi le platine, le palladium et le rhodium ; de façon encore préférée le catalyseur de Karstedt ;
le composant (B-1) a de préférence une masse moléculaire moyenne en poids Mw située dans la gamme allant de 300 à 10000 g/mol, déterminée par chromatographie par perméation de gel; le composant (B-1) comprenant de façon encore préférée des unités $(R^4)SiO_{3/2}$ et, optionnellement, $(R^4)_3SiO_{1/2}$ unités, des unités $(R^4)_2SiO_{2/2}$ et des unités $SiO_{4/2}$,
chaque $R^4$ est indépendamment choisi dans le groupe constitué par des groupes alkyles linéaires ou ramifiés ayant de 1 à 4 atomes de carbone, les groupes alcoxy linéaires ou ramifiés ayant de 1 à 4 atomes de carbone, $H_2C=CH-C(=O)-OR^5-$ (un groupe alkylène acryloxy) ou $H_2C=C(CH_3)-C(=O)-OR^5-$ (un groupe méthacryloxyalkylène), $R^5$ représentant un groupe alkylène linéaire ayant de 1 à 6 atomes de carbone ;
le composant (B-2) est de préférence un polymère organique ayant au moins deux groupes $-SiR^6_a X_{3-a}$ liés à son squelette polymère, dans lequel $R^6$ est un groupe alkyle ayant de 1 à 6 atomes de carbone, $R^6$ étant de façon encore préférée un groupe alkyle choisi parmi méthyle, éthyle, propyle, isopropyle, 1-butyle, 2-butyle, 2-méthyl-1-propyle et 2-méthyl-2-propyle, et le squelette polymère est de préférence choisi parmi un polyéther, polyuréthane, polyacrylate, poly(méth)acrylate, polyoléfine saturée et polyester, chacun pouvant être linéaire ou ramifié ;
le composant (B-3) est de préférence choisi parmi $Si(O-R^7)_4$, $(R^8)Si(O-R^7)_3$ et une combinaison

EP 3 725 856 B1

de ceux-ci,

$R^7$ étant un groupe alkyle linéaire ou ramifié ayant de 1 à 3 atomes de carbone et

$R^8$ étant un groupe alkyle linéaire ou ramifié ayant de 1 à 3 atomes de carbone, un groupe alkyle linéaire ou ramifié ayant de 1 à 4 atomes de carbone qui est substitué par $H_2C=CH-C(=O)-O-$ ou un groupe alkyle linéaire ou ramifié ayant de 1 à 4 atomes de carbone qui est substitué par $H_2C=C(CH_3)-C(=O)-O-$ ;

le composant (B-4) est de préférence un composé comprenant Ti, Zr, Al, Sn ou Zn, de façon encore préférée un composé représenté par $Mt(O-A1)_4$, Mt représentant Ti ou Zr et A1 étant choisi parmi méthyle, éthyle, n-propyle, i-propyle, 1-butyle, 2-butyle, 2-méthyl-1-propyle et 2-méthyl-2-propyle ;

le composant (C) est de préférence choisi parmi l'oxyde de titane, l'oxyde de fer, l'oxyde de cérium, l'oxyde de vanadium, l'oxyde de cobalt, l'oxyde de chrome, l'oxyde de manganèse, le dioxyde de silicium, la terre de diatomées, le carbonate de calcium, le carbonate de magnésium, l'alumine, les billes de verre creuses, les billes de résine creuses, les silicates, les alumosilicates et toute combinaison de ceux-ci ; le composant (C) est de façon encore préférée différent du composant (A-3) et de façon encore préférée choisi parmi le dioxyde de silicium, la kaolinite et toute combinaison de ceux-ci.

2. Première préparation silicone pouvant être obtenue par mélange de la composition (a) et de la composition (b) du premier kit défini à la revendication 1.

3. Procédé de durcissement de la première préparation de silicone selon la revendication 2, dans lequel le durcissement est effectué en chauffant la première préparation de silicone à une température située dans la gamme allant de 100 à 200°C, de façon encore préférée de 120 à 190°C, le chauffage étant de préférence conduit sur une période de 0,5 à 5 minutes, de façon encore préférée de 1 à 3 minutes, de façon encore plus préférée de 1 à 2 minutes.

4. Premier matériau durci apte à être obtenu par durcissement de la première préparation de silicone définie dans la revendication 2, le durcissement étant de préférence effectué au moyen du procédé défini dans la revendication 3.

5. Deuxième kit comprenant une composition (c) et une composition (d), dans lequel la composition (c) et la composition (d) sont spatialement séparées l'une de l'autre et la composition (c) et la composition (d) comprennent

de 400 à 800 parties en poids de composant (A-1) qui est tel que défini dans la revendication 1 ;

de 10 à 200 parties en poids du composant (A-2) qui est tel que défini dans la revendication 1 ;

de 0 à 300 parties en poids du composant (A-3) qui est tel que défini dans la revendication 1 ;

de 0 à 40 parties en poids du composant (A-4) qui est tel que défini dans la revendication 1 ;

de 0,1-1000 ppm de composant (A-5), qui est tel que défini dans la revendication 1, exprimé en termes de poids du métal de transition par rapport au poids total des composants (A-1) à (A-4) ;

de 0,5 à 50 parties en poids du composant (B-3) qui est tel que défini dans la revendication 1 ;

de 0,5 à 5% en poids du composant (B-4), qui est tel que défini dans la revendication 1, par rapport au poids total du composant (B-3) ;

de 0 à 400 parties en poids du composant (C) qui est tel que défini dans la revendication 1 ;

la quantité totale des composants (A-1) à (A-4), (B-1), (B-3) et (C) étant de 1000 parties en poids et le poids total des composants (A-1) à (A-5), (B-3), (B-4) et (C) représente au moins 75% en poids du poids total des compositions (c) et (d),

à condition que les composants suivants ne soient pas présents ensemble dans l'une des compositions (c) et (d) :

(A-2) et (A-5) ;

(B-4) et (B-3).

6. Deuxième préparation de silicone apte à être obtenue en mélangeant la composition (c) et la composition (d) du kit défini à la revendication 5.

7. Procédé de durcissement de la deuxième préparation de silicone selon la revendication 6, dans lequel le durcissement est effectué en chauffant la deuxième préparation de silicone à une température située dans la gamme allant de 100 à 200°C, de façon encore préférée de 120 à 190°C, le chauffage étant de préférence conduit sur une période de 0,5 à 5 minutes, de façon encore préférée de 1 à 3 minutes, de façon encore plus préférée de 1 à 2 minutes.

8. Composite multicouche comprenant

(i) un matériau de support ;

(ii) optionnellement une couche adhésive apte à être obtenue par durcissement de la deuxième préparation de silicone définie dans la revendication 6 ;

(iii) une couche de base apte à être obtenue par durcissement de la deuxième préparation de silicone définie dans la revendication 6, la deuxième préparation de silicone pour former la couche de base pouvant avoir la même constitution que la deuxième préparation de silicone pour former la couche adhésive ou une constitution différente de celle-ci ;

(iv) une couche de finition apte à être obtenue en durcissant la première préparation de silicone définie dans la revendication 1 ;

le matériau de support, la couche adhésive optionnelle, la couche de base et la couche de finition étant présentes dans l'ordre dans lequel elles sont mentionnées ;

le matériau de support étant de préférence un matériau textile, qui comprend des fibres naturelles, des fibres synthétiques ou une combinaison de celles-ci, ou du cuir ;

les fibres naturelles étant de préférence choisies dans le groupe consistant en le coton, la laine, le chanvre, le sisal, le lin, le jute et toute combinaison de ceux-ci ;

les fibres synthétiques sont des fibres polymères, le polymère étant choisi dans le groupe constitué de la rayonne, du polyuréthane, du polyester, du polypropylène, du polyéthylène, du polyamide, du polyacrylnitrile, du polycarbonate et de toute combinaison de ceux-ci.

9. Composite multicouche tel que défini dans la revendication 8, dans lequel le composite multicouche comprend une couche adhésive apte à être obtenue par durcissement de la deuxième préparation silicone définie dans la revendication 6.

10. Composite multicouche tel que défini dans la revendication 8 ou la revendication 9, dans lequel le composite multicouche fait partie d'un vêtement, d'une chaussure, d'un gant, d'un tissu de rembourrage ou d'un matériau de garniture.

11. Procédé de préparation d'un composite multicouche tel que défini dans la revendication 8, comprenant les étapes consistant à

(i) appliquer sous forme d'un revêtement une deuxième préparation silicone telle que définie dans la revendication 6 sur une surface d'un matériau de support,

(ii) durcir le revêtement de la deuxième préparation silicone de façon à former un matériau durci en tant que couche de base,

(iii) appliquer sous forme d'un revêtement une première préparation de silicone telle que définie dans la revendication 2 sur la surface du premier matériau durci de la couche de base formée à l'étape (ii),

(iv) durcir le revêtement formé par la première préparation de silicone pour former une couche de finition.

12. Procédé de préparation d'un composite multicouche tel que défini dans la revendication 9, comprenant les étapes consistant à

(i) appliquer sous forme d'un revêtement une deuxième préparation de silicone telle que définie dans la revendication 6 sur une surface d'un matériau de support,

(ii) durcir le revêtement de la deuxième préparation de silicone afin de former un deuxième matériau durci en tant que couche adhésive,

(iii) appliquer sous forme d'un revêtement une deuxième préparation de silicone telle que définie dans la revendication 6 sur la surface du deuxième matériau durci de la couche adhésive formée à l'étape (ii),

(iv) durcir le revêtement de la deuxième préparation de silicone afin de former un deuxième matériau durci en tant que couche de base,

(v) appliquer sous forme d'un revêtement une première préparation de silicone telle que définie dans la revendication 2 sur la surface du deuxième matériau durci de la couche de base formée à l'étape (iv),

(vi) durcir le revêtement de la première préparation de silicone afin de former un premier matériau durci en tant que couche de finition ;

la deuxième préparation de silicone appliquée à l'étape (i) ayant la même constitution que la deuxième préparation de silicone appliquée à l'étape (iii) ou une constitution différente de celle-ci.

13. Procédé de préparation d'un composite multicouche tel que défini dans la revendication 9, comprenant les étapes consistant à

(i) appliquer sous forme d'un revêtement une première préparation de silicone telle que définie dans la revendication 2 sur la surface d'un matériau antiadhésif,
(ii) durcir le revêtement de la première préparation de silicone afin de former un premier matériau durci en tant que couche de finition,
(iii) appliquer sous forme d'un revêtement une deuxième préparation de silicone telle que définie dans la revendication 6 sur la surface du premier matériau durci de la couche de finition formée à l'étape (ii),
(iv) durcir le revêtement de la deuxième préparation de silicone afin de former un deuxième matériau durci en tant que couche de base,
(v) appliquer sous forme d'un revêtement une deuxième préparation de silicone telle que définie dans la revendication 6 sur la surface du deuxième matériau durci de la couche de base formée à l'étape (iv),
(vi) placer un matériau de support sur le deuxième revêtement de préparation de silicone formé à l'étape (v),
(vii) durcir le revêtement de la deuxième préparation de silicone afin de former un deuxième matériau durci en tant que couche adhésive,
(viii) retirer le matériau antiadhésif de la surface du premier matériau durci de la couche de finition formée à l'étape (ii) ;

la deuxième préparation de silicone appliquée à l'étape (i) ayant la même constitution que la deuxième préparation de silicone appliquée à l'étape (iii) ou une constitution différente de celle-ci.

14. Procédé de préparation d'un composite multicouche tel que défini dans la revendication 9, comprenant les étapes consistant à

(i) appliquer sous forme d'un revêtement une première préparation de silicone telle que définie dans la revendication 2 sur la surface d'un matériau antiadhésif,
(ii) durcir le revêtement de la première préparation de silicone afin de former un premier matériau durci en tant que couche de finition,
(iii) appliquer sous forme d'un revêtement une deuxième préparation de silicone telle que définie dans la revendication 6 sur la surface du premier matériau durci de la couche de finition formée à l'étape (ii),
(iv) placer un matériau de support sur le deuxième revêtement de préparation de silicone formé à l'étape (iii),
(v) durcir le revêtement de la deuxième préparation de silicone afin de former un deuxième matériau durci en tant que couche de base,
(vi) retirer le matériau antiadhésif de la surface du premier matériau durci de la couche de finition formée à l'étape (ii).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150165745 A1
- EP 3231606 A1
- US 20180202100 A1
- WO 2013000788 A1

**Non-patent literature cited in the description**

- *CHEMICAL ABSTRACTS,* 1020665-14-8